# EUROPEAN PATENT APPLICATION

(11) **EP 4 664 652 A1**
(43) Date of publication of application: **17.12.2025**
(21) Application number: 23933355.2
(22) Date of filing: 17.04.2023
(51) Int. Cl.: H01M 50/414

(54) **SEPARATOR, BATTERY CELL, BATTERY, AND ELECTRIC DEVICE**

(71) Applicant: Contemporary Amperex Technology Co., Limited, Ningde, Fujian 352100 (CN)
(72) Inventor: LI, Baiqing, Ningde, Fujian 352100 (CN); PENG, Shuangjuan, Ningde, Fujian 352100 (CN); PENG, Lin, Ningde, Fujian 352100 (CN); JIN, Haizu, Ningde, Fujian 352100 (CN); ZHAO, Fenggang, Ningde, Fujian 352100 (CN)
(74) Representative: Kraus & Lederer PartGmbB
(86) International application number: PCT/CN2023/088804
(87) International publication number: WO 2024/216475

(57) **Abstract**

The present application provides a separator, a battery cell, a battery, and an electrical apparatus. The separator comprises a separator body and a polymer layer provided on at least one surface of the separator body. The separator satisfies: v/λ>5.00, wherein λ represents the porosity of the separator, v represents the liquid absorption rate of the separator, and the unit of the liquid absorption rate is mg/s.

## Description

### TECHNICAL FIELD

The present application relates to the field of batteries, in particular to a separator, a battery cell, a battery, and an electrical apparatus.

### BACKGROUND

Because of the characteristics of a high capacity, a long service life and the like, battery cells are widely used in electronic devices, such as mobile phones, laptops, electromobiles, electric cars, electric airplanes, electric ships, electric toy cars, electric toy ships, electric toy airplanes, and electric tools.

With the increasingly wide application range of batteries, the requirements for the performance of the battery cells become increasingly stringent. However, the current cycle performance and storage performance of battery cells are poor and still need to be further improved.

### SUMMARY OF THE INVENTION

Embodiments of the present application are conducted in view of the above problems, and aim to provide a separator, a battery cell, a battery, and an electrical apparatus.

A first aspect of the present application provides a separator. The separator includes a separator body and a polymer layer arranged on at least one surface of the separator body. The polymer layer includes a liquid-absorbing polymer. The satisfies: v/λ>5.00, where λ represents a porosity of the separator, v represents a liquid absorption rate of the separator, and the unit of the liquid absorption rate is mg/s.

Therefore, the separator of the embodiment of the present application includes the polymer layer, the polymer layer includes a liquid-absorbing polymer, v/λ>5.00, the polymer layer is in contact with an electrolyte, polymer molecular chains are stretched open, and the electrolyte can diffuse between the molecular chains. The introduction of the liquid-absorbing polymer can accelerate the absorption of the electrolyte, increase the electrolyte reabsorption rate during a discharge process of the battery cell, accelerate a transmission rate of the electrolyte between the separator and an electrode sheet, reduce the liquid deficiency situation during a cyclic charge and discharge process, reduce the battery polarization, and improve the cycle performance of the battery cell. The introduction of the liquid-absorbing polymer can also form a uniform high infiltration point between the separator and the electrode sheet, and uniformly improve the infiltration performance of the separator and the electrode sheet. The liquid-absorbing polymer can construct a three-dimensional connected interface between the separator and the electrode sheet, and further increase the liquid absorption rate of the separator and the electrode sheet, thereby improving the cycle performance of the battery cell.

In some embodiments, the separator satisfies: 5<v/λ<50.

In some embodiments, a contact angle between the polymer layer and the electrolyte is in a range from 5° to 25°; where the electrolyte includes lithium hexafluorophosphate and an organic solvent, a molar concentration of lithium hexafluorophosphate is 1 mol/L, and the organic solvent includes ethylene carbonate, ethyl methyl carbonate and dimethyl carbonate in a volume ratio of 1:1:1.

Therefore, the polymer layer of the embodiment of the present application has the liquid-absorbing polymer, and the affinity between the liquid-absorbing polymer and the electrolyte is relatively good, so the infiltration performance of the separator and the electrolyte can be improved, thereby facilitating further improving the liquid absorption rate of the separator, accelerating the absorption of the electrolyte, accelerating the transmission rate of the electrolyte between the separator and the electrode sheet, reducing the liquid deficiency situation during the cyclic charge and discharge process, reducing the battery polarization, and thus improving the cycle performance of the battery cell.

In some embodiments, a coating weight of the liquid-absorbing polymer per unit area of the separator is in a range from 0.5 mg/1540.25 mm² to 5 mg/1540.25 mm². When the coating weight is within the above range, the capability to form a gel-like substance with the electrolyte can be further improved, thereby increasing the liquid absorption rate.

In some embodiments, the liquid-absorbing polymer includes a fluoropolymer; a crystallinity of the fluoropolymer measured by differential scanning calorimetry is Xc₁, 0<Xc₁≤30%; and a melting temperature of the fluoropolymer is Tₘ₁ and has a unit of °C, where 0<Tₘ₁≤140.

In some embodiments, a glass-transition temperature of the fluoropolymer is T_{g1} and has a unit of °C, where -150≤T_{g1}≤60.

In some embodiments, the fluoropolymer includes at least one of a building block represented by Formula (AI) to a building block represented by Formula (AIII), 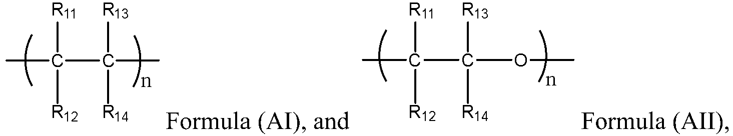
in Formula (AI) and Formula (AII), R₁₁, R₁₂, R₁₃ and R₁₄ each independently include a hydrogen atom, a fluorine atom, a chlorine atom, a substituted or unsubstituted C1-C3 alkyl group or a substituted or unsubstituted C1-C3 alkoxy group, and at least one of R₁₁, R₁₂, R₁₃ and R₁₄ includes a fluorine atom; 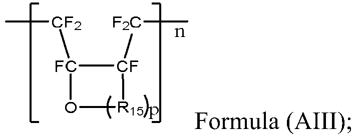
in Formula (AIII),
   R₁₅ includes a single bond, and a substituted or unsubstituted C1-C3 alkyl group;
   p is a positive integer selected from 1 to 3; and n is a positive integer selected from 1000 to 30000.

In some embodiments, the liquid-absorbing polymer further includes an ether polymer, where the ether polymer is made into a sheet structure; the sheet structure is subjected to a dynamic frequency scanning test at (Tₘ₂+20)°C to obtain an elasticity modulus G'-loss modulus G" curve, a slope of the elasticity modulus G'-loss modulus G" curve is K₁, 1<K₁<∞, and Tₘ₂°C represents a melting temperature of the ether polymer; optionally, 1<K₁≤100; and further optionally, 1<K₁≤10.

In some embodiments, the ether polymer includes a building block represented by Formula (BI) and/or a building block represented by Formula (BII),

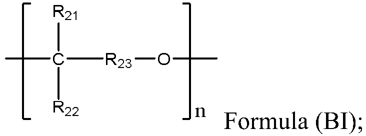

in Formula (BI), R₂₁ and R₂₂ each independently include a hydrogen atom, a substituted or unsubstituted C1-C3 alkyl group, or a substituted or unsubstituted C1-C3 alkoxy group; R₂₃ includes a substituted or unsubstituted C1-C5 alkylene group; 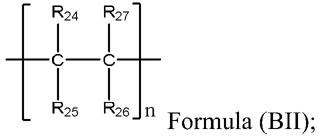 and
in Formula (BII), R₂₄ to R₂₇ each independently include a hydrogen atom, a substituted or unsubstituted C1-C3 alkyl group, a substituted or unsubstituted C1-C3 alkoxy group or ether group, and at least one of R₂₄ to R₂₇ includes a substituted or unsubstituted C1-C3 alkoxy group or ether group.

In some embodiments, the liquid-absorbing polymer includes an ester polymer, where the ester polymer is made into a sheet structure; the sheet structure is subjected to a dynamic frequency scanning test at (Tₘ₃+20)°C to obtain an elasticity modulus G'-loss modulus G" curve, a slope of the elasticity modulus G'-loss modulus G" curve is K₂, 1<K₂<∞, and Tₘ₃°C represents a melting temperature of the ester polymer; optionally, 1<K₂≤100; and further optionally, 1<K₂≤10.

In some embodiments, the ester polymer includes a building block represented by Formula (CI) and/or a building block represented by Formula (CII), 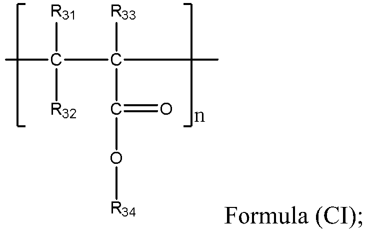
in Formula (CI), R₃₁, R₃₂ and R₃₃ each independently include a hydrogen atom, or a substituted or unsubstituted C1-C8 alkyl group; R₃₄ includes a substituted or unsubstituted C1-C8 alkyl group, or a substituted or unsubstituted C1-C8 hydroxyalkyl group; 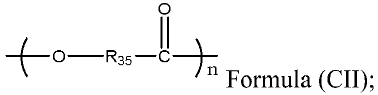
in Formula (CII), R₃₅ includes a substituted or unsubstituted C2-C6 methylene; and optionally, R₃₅ each independently includes a substituted or unsubstituted C2-C4 methylene.

In some embodiments, the liquid-absorbing polymer includes an aldehyde-ketone polymer, where the aldehyde-ketone polymer is made into a sheet structure; the sheet structure is subjected to a dynamic frequency scanning test at (Tₘ₄+20)°C to obtain an elasticity modulus G'-loss modulus G" curve, a slope of the elasticity modulus G'-loss modulus G" curve is K₃, 0.8≤K₃<∞, Tₘ₄°C represents a melting temperature of the aldehyde-ketone polymer; optionally, 0.8≤K₃≤100; and further optionally, 0.8≤K₃≤10.

In some embodiments, the aldehyde-ketone polymer includes a building block represented by Formula (DI) and/or a building block represented by Formula (DII), 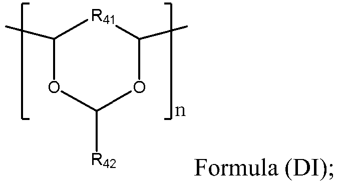
in Formula (DI), R₄₁ includes a single bond, and a substituted or unsubstituted C1-C6 methylene; R₄₂ includes a hydrogen atom, and a substituted or unsubstituted C1-C6 alkyl group; 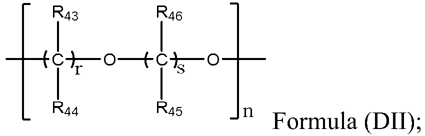
in formula (DII), R₄₃ to R₄₆ each independently include a hydrogen atom, a hydroxyl group, a substituted or unsubstituted C1-C3 alkyl group, a substituted or unsubstituted C1-C3 hydroxyalkyl group, or a substituted or unsubstituted C1-C3 alkoxy group; and r and s are each independently selected from integers in a range from 0 to 5, and at least one of r and s is selected from a positive integer.

In some embodiments, the liquid-absorbing polymer has a molecular weight ranging from 1.2×10⁵ g/mol to 1.0×10⁶ g/mol.

In some embodiments, the separator body includes a substrate, and the polymer layer is arranged on at least one surface of the substrate.

In some embodiments, the separator body includes a substrate and a heat-resistant coating, where the heat-resistant coating is arranged on at least one surface of the substrate, and the polymer layer is arranged on a surface of the heat-resistant coating facing away from the substrate.

In some embodiments, the polymer layer further includes heat-resistant particles. A synergistic effect of the heat-resistant particles and the fluoropolymer may further improve the overall heat resistance and ion transmission performance of the separator.

In some embodiments, based on a total mass of the polymer layer, a ratio of a mass percentage content of the fluoropolymer to a mass percentage content of the heat-resistant particles is (0.2 to 5):1; and optionally, (0.5 to 2):1. When the content of the heat-resistant particles and the content of the fluoropolymer are within the above range, the overall heat resistance and ion transmission performance of the separator may be further improved.

In some embodiments, the polymer layer has a thickness ranging from 0.5 µm to 3.5 µm. When the thickness of the polymer layer is within the above range, the overall heat resistance and ion transmission performance of the separator can be further improved.

In a second aspect, the present application provides a battery cell, including the separator according to any of embodiments in the first aspect of the present application.

In a third aspect, the present application provides a battery, including the battery cell according to any of embodiments in the second aspect of the present application.

In a fourth aspect, the present application provides an electrical apparatus, including the battery according to any of embodiments in the third aspect of the present application.

### BRIEF DESCRIPTION OF DRAWINGS

In order to explain technical solutions of the embodiments of the present application more clearly, a brief introduction of accompanying drawings to be used in the embodiments of the present application is made below. Apparently, the accompanying drawings described below are merely some embodiments of the present application, and other drawings can be obtained by those ordinarily skilled in the art according to these drawings without creative efforts.
FIG. 1 is a schematic diagram of an embodiment of a battery cell of the present application.
FIG. 2 is a schematic exploded view of the embodiment of the battery cell in FIG. 1.
FIG. 3 is a schematic view of an embodiment of a battery module of the present application.
FIG. 4 is a schematic view of an embodiment of a battery pack of the present application.
FIG. 5 is a schematic exploded view of the embodiment of the battery pack as shown in FIG. 4.
FIG. 6 is a schematic diagram of an embodiment of an electrical apparatus including a battery cell of the present application as a power source.

The accompanying drawings may not be drawn according to an actual scale.

Description of reference numerals:
1, Battery pack; 2, Upper box body; 3, Lower box body; 4, Battery module;
5, Battery cell; 51, Case; 52, Electrode assembly;
53, Cover plate;
6, Electrical apparatus.

### DETAILED DESCRIPTION

Hereinafter, embodiments specifically disclosing a separator, a battery cell, a battery, and an electrical apparatus of the present application are described in detail. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions. Unless otherwise specified, all technical features and optional technical features of the present application may be combined with each other to form new technical solutions.

If not specifically stated, all steps of the present application may be performed sequentially or randomly, preferably sequentially. For example, a method includes steps (a) and (b), meaning that the method may include steps (a) and (b) performed sequentially, or may include steps (b) and (a) performed sequentially. For example, the reference to the fact that the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, "including" and "containing" mentioned in the present application may be open-ended, or may be closed-ended. For example, "including" and "containing" may indicate that it is possible to include or contain other components not listed, and it is also possible to include or contain only the listed components.

If not specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

In the present application, the terms "a plurality of" and "multiple" refer to two or two types or more.

The term "alkyl group" encompasses both straight chain and branched chain alkyl groups. For example, the alkyl group may be a C1-C5 alkyl group, a C1-C4 alkyl group, a C1-C3 alkyl group, or a C1-C2 alkyl group. In some embodiments, the alkyl group includes methyl, ethyl, propyl, isopropyl, butyl, isobutyl, and the like. Additionally, the alkyl group may be optionally substituted. When substituted, a substituent group includes a fluorine atom.

The term "alkoxy group" refers to an alkyl group connected to an oxygen atom via a single bond. For example, the alkoxy group may be a C₁to C₅alkoxy group, a C₁to C₃alkoxy group, or a C₁to C₂alkoxy group. In some embodiments, the alkoxy group may include methoxy, ethoxy, propoxy. In addition, the alkoxy group may be optionally substituted.

The term "halogen atom" means a fluorine atom, a chlorine atom, a bromine atom or the like.

The term "hydrogen" refers to 1H (protium, H), 2H (deuterium, D) or 3H (tritium, T). In various embodiments, "hydrogen" may be 1H (protium, H).

A battery cell includes a positive electrode sheet, a negative electrode sheet, a separator, and an electrolyte. The separator is located between the positive electrode sheet and the negative electrode sheet so as to separate the positive electrode sheet from the negative electrode sheet. During the charge and discharge cycle of the battery cell, an electrode assembly will expand in volume, especially in a later stage of the cycle of the battery cell, an expansion force is high, which causes the electrolyte to be squeezed out, but the liquid absorption rate of the separator is slow, the electrolyte is difficult to reabsorb, the risk of liquid deficiency and bridge breakage in the electrode sheet is high, consequently, the cycle performance of the battery cell may be deteriorated, and the cycle life of the battery cell is shortened.

In view of the above problems, an embodiment of the present application provides a separator. The separator includes a polymer layer, the polymer layer includes a liquid-absorbing polymer, v/λ>5.00, the polymer layer is in contact with an electrolyte, polymer molecular chains are stretched open, and the electrolyte can diffuse between the molecular chains. The introduction of the liquid-absorbing polymer can accelerate the absorption of the electrolyte, increase the electrolyte reabsorption rate during a discharge process of the battery cell, accelerate a transmission rate of the electrolyte between the separator and an electrode sheet, reduce the liquid deficiency situation during a cyclic charge and discharge process, reduce the battery polarization, and improve the cycle performance of the battery cell. The introduction of the liquid-absorbing polymer can also form a uniform high infiltration point between the separator and the electrode sheet, and uniformly improve the infiltration performance of the separator and the electrode sheet. The liquid-absorbing polymer can construct a three-dimensional connected interface between the separator and the electrode sheet, and further increase the liquid absorption rate of the separator and the electrode sheet, thereby improving the cycle performance of the battery cell.

### Separator

In a first aspect, an embodiment of the present application provides a separator. The separator includes a separator body and a polymer layer arranged on at least one surface of the separator body, and the polymer layer includes a liquid-absorbing polymer, where the separator satisfies: v/λ>5.00, λ represents a porosity of the separator; and v represents a liquid absorption rate of the separator, and the unit of the liquid absorption rate is mg/s.

The separator may be made of a substrate, the liquid-absorbing polymer and the like. Alternatively, the separator is derived from a battery cell. The battery cell is disassembled, and the separator infiltrated in the electrolyte in the battery cell is taken out; and the separator is washed with deionized water and then dried under vacuum at 80°C for 12 h to obtain the separator, which is subjected to a separator test such as a liquid absorption rate.

In the embodiment of the present application, the porosity of the separator is a ratio of a pore volume in the separator to an overall volume of the separator, and may be detected by using equipment and methods known in the art, for example, detection is performed according to GB/T21650.2-2008 "Determination of pore size distribution and porosity of solid materials by mercury intrusion method and gas adsorption method Part 2: Analysis of mesopores and macropores by gas adsorption method" and ASTMD2873-94el "Standard Test Method for Interior Porosity of Poly(Vinyl Choride) (PVC) Resins by Mercury Intrusion Porosimetry".

In the embodiment of the present application, v represents the liquid absorption rate of the separator, which may be detected by the following method, and the specific steps are as follows:
1 mL of electrolyte is drawn with a pipette;
the separator is cut into small discs of 1540.25 mm² and suspended horizontally in the air;
the 1 mL of electrolyte drawn by the pipette drips onto a center of the small disc, and timekeeping is started to record time when an infiltration radius of the electrolyte reaches 10 mm; and
a ratio of the infiltration radius to the infiltration time is calculated to obtain the liquid absorption rate v.

The present application uses a standard electrolyte as a test sample for testing, and a specific formula of the electrolyte may refer to an electrolyte formula in the embodiment.

The separator of the embodiment of the present application includes the polymer layer, the polymer layer includes the liquid-absorbing polymer, v/λ>5.00, the polymer layer is in contact with the electrolyte, the polymer molecular chains are stretched open, and the electrolyte can diffuse between the molecular chains. The introduction of the liquid-absorbing polymer can accelerate the absorption of the electrolyte, increase the electrolyte reabsorption rate during the discharge process of the battery cell, accelerate the transmission rate of the electrolyte between the separator and the electrode sheet, reduce the liquid deficiency situation during the cyclic charge and discharge process, reduce the battery polarization, and improve the cycle performance of the battery cell. The introduction of the liquid-absorbing polymer can also form the uniform high infiltration point between the separator and the electrode sheet, and uniformly improve the infiltration performance of the separator and the electrode sheet.

After the battery cell is formed, the liquid-absorbing polymer can construct the three-dimensional connected interface between the separator and the electrode sheet, and further increase the liquid absorption rate of the separator and the electrode sheet, thereby improving the cycle performance of the battery cell.

In some embodiments, 5<v/λ<50.

Exemplarily, v/λ may be 5.1, 5.2, 5.5, 6, 6.5, 7, 8, 9, 10, 12, 15, 18, 20, 25, 30, 35, 40, 45, 46, 47, 48, 49, 49.5, 50, 55, or a range composed of any two of the above numerical values.

In some embodiments, the contact angle between the polymer layer and the electrolyte is in a range from 5° to 25°; wherein the electrolyte includes lithium hexafluorophosphate and an organic solvent. The present application uses a standard electrolyte as a test sample for testing. The specific formula of the electrolyte may refer to the electrolyte formula in the embodiment. For example, the electrolyte may include lithium hexafluorophosphate and an organic solvent, the molar concentration of the lithium hexafluorophosphate is 1 mol/L, and the organic solvent includes ethylene carbonate, ethyl methyl carbonate and dimethyl carbonate in a volume ratio of 1:1:1.

Since the polymer layer has the liquid-absorbing polymer, the liquid-absorbing polymer has relatively good affinity with the electrolyte, which can improve the infiltration performance of the separator and the electrolyte, thereby facilitating further improving the liquid absorption rate of the separator, and thus improving the cycle performance of the battery cell. Exemplarily, the contact angle betweeen the polymer layer and the electrolyte may be 5°, 8°, 10°, 12°, 15°, 18°, 20°, 25°, or a range composed of any two of the above numerical values.

The contact angle in the embodiment of the present application refers to an included angle between a polymer layer-electrolyte interface and air-electrolyte interface via interior of the electrolyte, and may be detected by using equipment and methods known in the art, for example, using a JC2000D goniometer to test the electrolyte contact angle of the polymer layer of the separator, and the electrolyte may be a standard electrolyte.

In some embodiments, a coating weight of the liquid-absorbing polymer is in a range from 0.5 mg/1540.25 mm² to 5 mg/1540.25 mm².

Optionally, the coating weight of the liquid-absorbing polymer is in a range from 0.5 mg/1540.25 mm² to 2.5 mg/1540.25 mm².

When the coating weight is within the above range, the capability to form a gel-like substance with the electrolyte can be further improved, thereby increasing the liquid absorption rate. Exemplarily, the coating weight of the liquid-absorbing polymer of the separator per unit area may be 0.5 mg/1540.25 mm², 0.8 mg/1540.25 mm², 1.0 mg/1540.25 mm², 1.2 mg/1540.25 mm², 1.3 mg/1540.25 mm², 1.5 mg/1540.25 mm², 2.0 mg/1540.25 mm², 2.2 mg/1540.25 mm², 2.5 mg/1540.25 mm², 3 mg/1540.25 mm², 3.5 mg/1540.25 mm², 4 mg/1540.25 mm², 4.5 mg/1540.25 mm², 5 mg/1540.25 mm², or a range composed of any two of the above numerical values.

In the embodiment of the present application, the coating weight refers to a coating weight of the liquid-absorbing polymer on one side of the separator, which may be detected by using equipment and methods known in the art. For example, by cutting the same jumbo roll of substrate and the separator into small discs of 1540.25 mm², respectively weighing a weight of 10 small discs of the separator, the coating weight of the liquid-absorbing polymer in the separator may be obtained by calculation.

In some embodiments, the liquid-absorbing polymer may include one or more of a fluoropolymer, an ether polymer, an ester polymer and a ketone-aldehyde polymer.

In some embodiments, the liquid-absorbing polymer includes a fluoropolymer, a crystallinity of the fluoropolymer measured through a differential scanning calorimetry is X_{C1}, 0<X_{C1}≤30%; and the melting temperature of the fluoropolymer is Tₘ₁ and has a unit of °C, 0<Tₘ₁≤140.

Crystallization refers to a process in which atoms, ions or molecules in a material are arranged in a certain spatial order to form an orderly structure. The conformation of the polymer in the crystallization is determined by both intramolecular and intermolecular factors. The intermolecular force will affect a stacking density between molecular chains. The crystallinity X_{C1} is used to represent the degree of crystallinity in the material, which may be measured by differential scanning calorimetry (DSC). Specifically, the test steps are: 0.5 g to 0.8 g of sample is taken and put in a carrier crucible, subjected to heating and cooling treatment under a nitrogen atmosphere, and heated from an initial temperature 20°C lower than the intrinsic T_{g1} of the material to a cut-off temperature 20°C higher than the intrinsic Tₘ₁ of the material at a heating rate of 10°C/min, and an actual glass-transition temperature T_{g1} and melting temperature Tₘ₁ of the material are determined according to endothermic and exothermic peaks or a transition point of the material in the process.

As a result, the fluoropolymer has relatively low crystallinity and melting temperature, which makes the molecular chain arrangement tend to be loose, an interaction force between the molecular chains is small, adjacent molecular chains are easily opened, the chain segment movement is achieved through intermolecular internal rotation, and a molecular chain structure with high flexibility is formed; and the fluoropolymer and the electrolyte in the battery cell can form the gel-like substance, thereby improving the cycle performance of the battery cell.

Exemplarily, the crystallinity X_{C1} of the fluoropolymer measured through the differential scanning calorimetry may be 5%, 10%, 15%, 20%, 25%, 30%, or a range composed of any two of the above numerical values.

Exemplarily, the melting temperature of the fluoropolymer may be 10°C, 20°C, 50°C, 70°C, 90°C, 100°C, 120°C, 140°C, or a range composed of any two of the above numerical values.

In some embodiments, a glass-transition temperature of the fluoropolymer is T_{g1} and has a unit of °C, where -150≤T_{g1}≤60.

The glass-transition temperature is a transition temperature of the polymer chain segments from freezing to movement. The glass-transition temperature has a certain influence on the flexibility of the polymer molecular chain. The lower the glass-transition temperature is, the better the flexibility of the polymer molecular chain at the room temperature is. The higher the glass-transition temperature is, the worse the flexibility of the molecular chain at the room temperature is. The glass-transition temperature may be measured by using the differential scanning calorimetry (DSC). The glass-transition temperature of the polymer is relatively low, the molecular chain segments are more flexible, and adjacent molecular chains are easier to open. Exemplarily, the glass-transition temperature of the fluoropolymer may be -150°C, -120°C, -100°C, -80°C, -60°C, -30°C, 0°C, 30°C, 60°C, or a range composed of any two of the above numerical values.

In some embodiments, the fluoropolymer includes at least one of a building block represented by Formula (AI) to a building block represented by Formula (AIII), 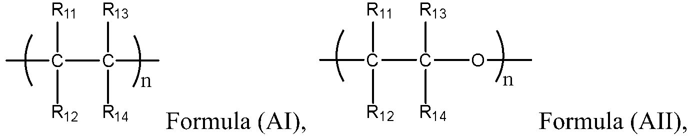 and

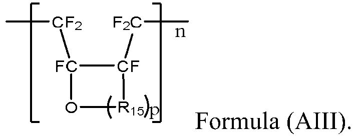

In Formula (AI) and Formula (AII), R₁₁, R₁₂, R₁₃ and R₁₄ each independently include a hydrogen atom, a fluorine atom, a chlorine atom, a substituted or unsubstituted C1-C3 alkyl group, or a substituted or unsubstituted C1-C3 alkoxy group, and at least one of R₁₁, R₁₂, R₁₃ and R₁₄ includes a fluorine atom.

When substituted, a substituent group may include one or more of a nitrile group (-CN), a nitro group, a sulfonic acid group, a sulfonyl group, amide, a carboxyl group, an ester group, and a halogen atom. The above-mentioned polymers are only examples of structural groups of a main molecular chain. In the embodiment of the present application, the polymers may also be obtained by copolymerizing the above-mentioned structural groups with a small amount of other types of structural groups (e.g., olefin building blocks, ester monomers, nitrile monomers, amide monomers, and other building blocks).

In Formula (AIII), R₁₅ includes a single bond, and a substituted or unsubstituted C1-C3 alkyl group.

In some embodiments, p is selected from positive integers in a range from 1 to 3.

In some embodiments, a polymerization degree n of the fluoropolymer is selected from positive integers in a range from 1000 to 30000.

In some embodiments, R₁₁, R₁₂, R₁₃ and R₁₄ each independently include a hydrogen atom, a fluorine atom, a chlorine atom, a substituted or unsubstituted C1-C2 alkyl group, or a substituted or unsubstituted C1-C2 alkoxy group; further optionally, R₁₁, R₁₂, R₁₃ and R₁₄ each independently include a hydrogen atom, a fluorine atom, a chlorine atom, methyl, fluoromethyl, methoxy or perfluoromethoxy.

In some embodiments, the fluoropolymer includes at least one of a building block represented by Formula (AI-1) to a building block represented by Formula (AI-11),

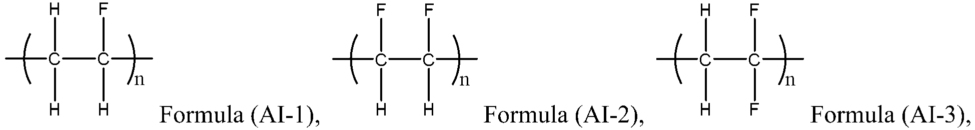

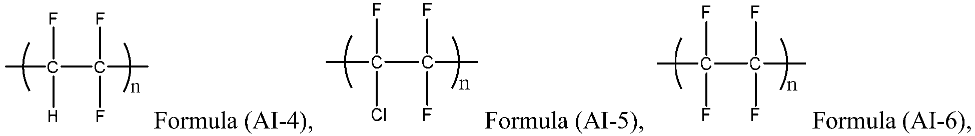

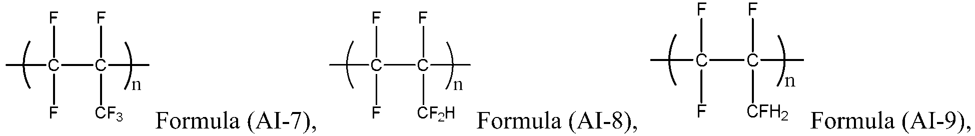

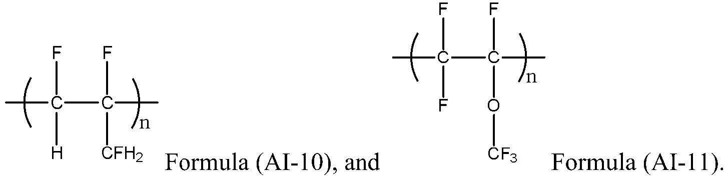

In some embodiments, the fluoropolymer includes at least one of a building block represented by Formula (AII-1) to a building block represented by Formula (AII-5),

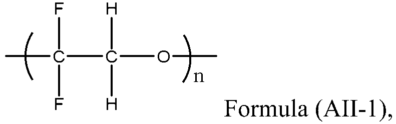

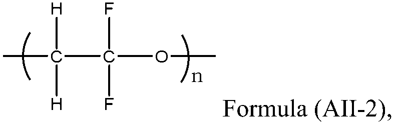

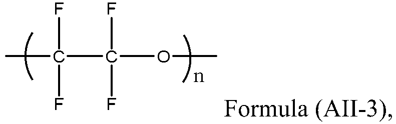

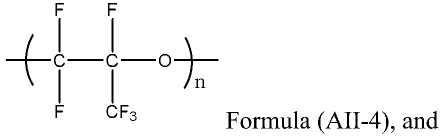

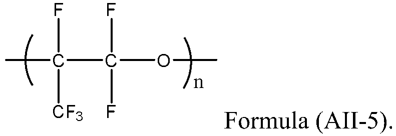

In some embodiments, the fluoropolymer includes at least one of a building block represented by Formula (AIII-1) to a building block represented by Formula (AIII-3),

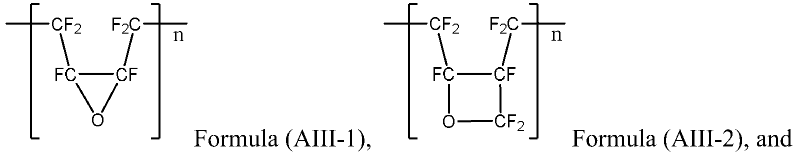

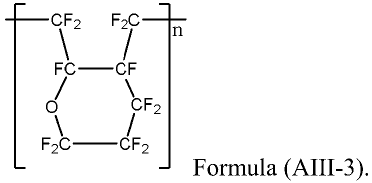

Exemplarily, the fluoropolymer includes one or more of polytetrafluoroethylene (PTFE), polyvinylidene fluoride (PVDF), fluorinated ethylene propylene (FEP) copolymer, perfluoroalkoxy (PFA) polymer, perfluoropolyethers (PFPE), polyvinylidene fluoride-hexafluoropropylene (PVDF-HFP) copolymer, polyvinylidene fluoride-trifluoroethylene (PVDF-TrFE) copolymer and perfluoro (1-butenyl vinyl ether) polymer (CYTOP for short).

Optionally, the fluoropolymer includes one or more of polytetrafluoroethylene (PTFE), polyvinylidene fluoride (PVDF), fluorinated ethylene propylene (FEP) copolymer, polyvinylidene fluoride-hexafluoropropylene (PVDF-HFP) copolymer, and polyvinylidene fluoride-trifluoroethylene (PVDF-TrFE) copolymer.

The above fluoropolymer may be derived from one or more of the following monomers: fluorocyclohexane, vinyl fluoride, 1,2-difluoroethylene, vinylidene fluoride, trifluoroethylene, chlorotrifluoroethylene, tetrafluoroethylene, hexafluoropropylene, 3,3,3-trifluoropropylene, trifluoropropylene, tetrafluoropropylene, pentafluoropropylene, and the like. Optionally, the above fluoropolymer may be derived from at least two of the following monomers: fluorocyclohexane, vinyl fluoride, 1,2-difluoroethylene, vinylidene fluoride, trifluoroethylene, chlorotrifluoroethylene, tetrafluoroethylene, hexafluoropropylene, 3,3,3-trifluoropropylene, trifluoropropylene, tetrafluoropropylene, and pentafluoropropylene.

The monomers used in the above-mentioned fluoropolymer are all short-chain monomers, which are conducive to polymerization to form a straight-chain linear structure or a short-chain branch structure. This type of structure has a low degree of entanglement, which is conducive to improving the flexibility of the molecular chain. The molecular chain can fully stretch in the electrolyte, which is conducive to the formation of a three-dimensional gel-like substance between the polymer and the electrolyte, and further improving the liquid absorption rate.

In some embodiments, a polymerization degree n of the fluoropolymer is selected from positive integers in a range from 5000 to 20000.

In some embodiments, the liquid-absorbing polymer has a molecular weight ranging from 1.2×10⁵ g/mol to 1.5×10⁶ g/mol; and optionally, 2×10⁵ g/mol to 1.5×10⁶ g/mol. When the molecular weight of the polymer is within the above range, it can ensure that the polymer exhibits a certain solubility in the electrolyte, while being difficult to completely dissolve and disperse by the electrolyte, which is beneficial to regulating the distribution and dispersion of the polymer; and the flexibility between the molecular chains of the polymer can be further improved, and the interaction force between the molecular chains is relatively weak, which is beneficial for the solvent molecules in the electrolyte to open the molecular chains, enter between the molecular chains, and be wrapped by the molecular chains, thereby facilitating active ions to enter an active substance through the solvent and realizing the smooth and rapid migration of the active ions.

When the molecular weight of the liquid-absorbing polymer is within the above range, it can ensure that the polymer exhibits a certain solubility in the electrolyte, while being difficult to completely dissolve and disperse by the electrolyte, which is beneficial to regulating the distribution and dispersion of the polymer on a surface of the active substance; and the flexibility between the molecular chains of the polymer can be further improved, and the interaction force between the molecular chains is relatively weak, which is beneficial for the solvent molecules in the electrolyte to open the molecular chains, enter between the molecular chains, and be wrapped by the molecular chains, thereby facilitating active ions to enter an active substance through the solvent and realizing the smooth and rapid migration of the active ions. Exemplarily, the molecular weight of the polymer may be 1.2×10⁵ g/mol, 2×10⁵ g/mol, 5×10⁵ g/mol, 8×10⁵ g/mol, 1×10⁶ g/mol, 1.5×10⁶ g/mol, or a range composed of any two of the above numerical values.

### [Ether polymer]

In some embodiments, the liquid-absorbing polymer includes the ether polymer, and the ether polymer is made into a sheet structure; and the sheet structure is subjected to a dynamic frequency scanning test at (Tₘ₂+20)°C to obtain an elasticity modulus G'-loss modulus G" curve, a slope of the elasticity modulus G'-loss modulus G" curve is K₁, 1<K₁<∞, and Tₘ₂°C represents a melting temperature of the ether polymer.

Specifically, a preparation process of the sheet structure is as follows: the ether polymer is vacuum dried at 80°C for 12 h. The dried ether polymer is hot pressed into a thin sheet by a flat vulcanizer. A hot pressing temperature is set to (Tₘ₂+20)°C, a calendering thickness is in a range from 1 min to 2 min, calendering time is 2 min, and the pressure is 8 MPa. After calendering for 2 min, a sample is taken out and placed on another vulcanizer of the same model for cold pressing at a pressure of 10 MPa. A round die with a diameter of 25 mm may be used to obtain polymer discs (sheet structures) in a fixed size. Exemplarily, the sheet structure may be a round disc with a thickness ranging from 1 mm to 2 mm and a diameter of 25 mm; or the sample may be prepared according to a sample standard required by testing equipment.

According to the conclusions of classical linear viscoelasticity, for polymers, especially linear polymers, the elasticity modulus G'-loss modulus G" in a terminal region (an interval range approaching a maximum angular velocity) of the elasticity modulus G'-loss modulus G" curve conforms to the frequency dependence, and a longest chain of the polymer plays a role in the viscoelastic behavior.

The specific steps of the dynamic frequency scanning test are as follows: the dynamic frequency scanning test is performed using a TA-AR2000EX rotational rheometer (TAinstruments, USA), where a parallel plate has a diameter of 25 mm and a thickness of 0.9 mm. To ensure that the test is conducted in a linear viscoelastic region, a strain during the dynamic frequency scanning test is 2%, a test temperature is Tₘ₂+20°C, and a frequency scanning range of the test is: 500rad/s≤w²≤0.05rad/s, so as to obtain data in a low-frequency region as much as possible.

The dynamic frequency scanning test may represent a degree of entanglement of molecular chains under solid phase melting (melt state). Compared with the linear structure or the short-chain branch structure, a long branched structure, a network structure and a low cross-linked structure have a high degree of entanglement and may show deviation from a linear terminal behavior, and the ether polymer shows a solid phase behavior. When the ether polymer of the present application meets the above range, an entanglement state of the molecular chains may be further reduced, which is beneficial to the diffusion of solvent molecules in the electrolyte between the molecular chains; and the ether polymer still maintains a certain molecular chain entanglement state, and can form a gel-like substance with the electrolyte, thereby improving the cycle performance and storage performance of the battery cell.

In some embodiments, 1<K₁≤100; and optionally, 1<K₁≤10. Exemplarily, K₁ may be 1.01, 1.1, 2, 5, 10, 15, 20, 30, 50, 100, 200, 500, 1000, 5000, 10000, or a range composed of any two of the above numerical values.

In some embodiments, a glass-transition temperature of the ether polymer is T_{g2} and has a unit of °C, -100≤T_{g2}≤50; and optionally, -80≤T_{g2}≤30. Exemplarily, the glass-transition temperature of the ether polymer may be -100°C, -80°C, -60°C, -30°C, 0°C, 30°C, 50°C, or a range composed of any two of the above numerical values.

In some embodiments, the ether polymer includes a building block represented by Formula (BI),

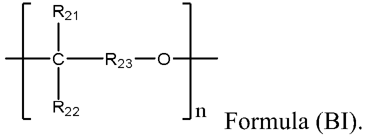

In Formula (BI), R₂₁ and R₂₂ each independently include a hydrogen atom, a substituted or unsubstituted C1-C3 alkyl group, or a substituted or unsubstituted C1-C3 alkoxy group; and R₂₃ includes substituted or unsubstituted C1-C5 methylene.

In some embodiments, R₂₁ and R₂₂ each independently include a hydrogen atom, and a substituted or unsubstituted C1-C2 alkyl group.

In some embodiments, R₂₃ includes a single bond, and a substituted or unsubstituted C1-C4 methylene.

Exemplarily, the ether polymer includes at least one of a building block represented by Formula (BI-1) to a building block represented by Formula (BI-8),

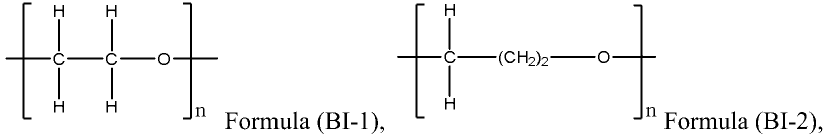

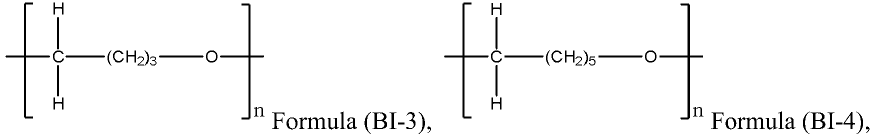

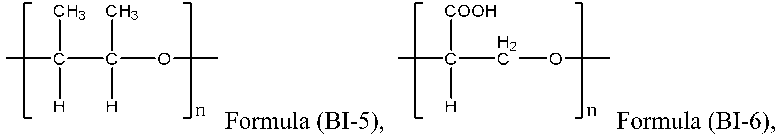

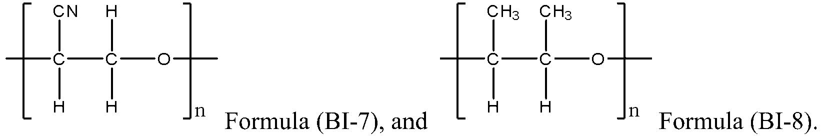

In some embodiments, the ether polymer includes a building block represented by Formula (BII),

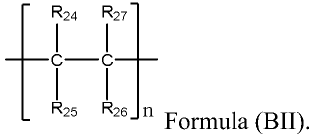

In Formula (BII), R₂₄ to R₂₇ each independently include a hydrogen atom, a substituted or unsubstituted C1-C3 alkyl group, a substituted or unsubstituted C1-C3 alkoxy group or ether group, and at least one of R₂₄ to R₂₇ includes a substituted or unsubstituted C1-C3 alkoxy group or ether group.

In some embodiments, R₂₄ to R₂₇ each independently include a hydrogen atom, a substituted or unsubstituted C1-C2 alkyl group, a substituted or unsubstituted C1-C2 alkoxy group, or an ether group, and at least one of R₂₄ to R₂₇ includes the substituted or unsubstituted C1-C2 alkoxy group or the ether group.

In some embodiments, the ether polymer includes a at least one of a building block represented by Formula (BII-1) to a building block represented by Formula (BII-7),

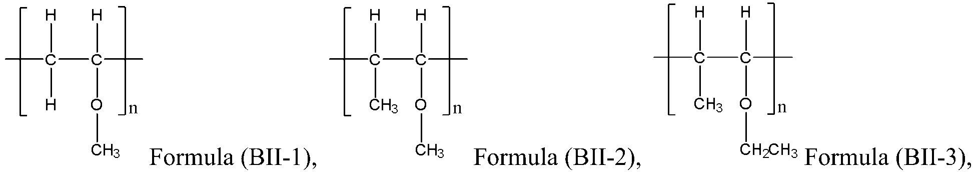

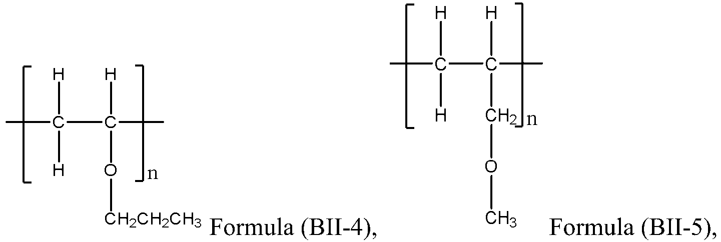

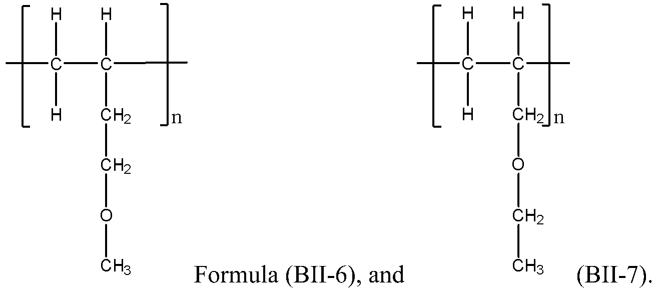

The monomers used in the above-mentioned ether polymers are multi-membered ring structures, such as structures with six-membered rings or less, or short-chain monomers, which are conducive to the polymerization to form a high-content -O- structure. This type of structure has a low degree of entanglement, which is conducive to improving the flexibility of the molecular chain. The molecular chain can fully stretch in the electrolyte and easily forms a gel-like substance with the electrolyte, thereby improving the cycle performance and storage performance of the battery cell.

The above polymers are merely examples of structural groups of the main molecular chain. In the embodiments of the present application, the polymer may also be obtained by copolymerizing the above structural groups with other types of structural groups (eg, olefin building blocks, acrylonitrile building blocks, etc.).

When the above groups are substituted, a substituent group may include one or more of a nitrile group (-CN), a nitro group, a sulfonic acid group, a sulfonyl group, amide, a carboxyl group, an ester group, and a halogen atom. The above substituent groups are high pressure resistant substituent groups and are more conducive to stabilizing the structure of the polymer. The halogen atom may include a fluorine atom, a chlorine atom, a bromine atom, and the like.

In some embodiments, a polymerization degree n of the ether polymer is selected from positive integers in a range from 1500 to 25000.

Optionally, the polymerization degree n of the ether polymer is selected from positive integers in a range from 3000 to 18000.

In some embodiments, the polymer has a molecular weight ranging from 1.2×10⁵ g/mol to 1.0×10⁶ g/mol.

Exemplarily, the molecular weight of the polymer may be 1.2×10⁵ g/mol, 2×10⁵ g/mol, 5×10⁵ g/mol, 8×10⁵ g/mol, 1×10⁶ g/mol, or a range composed of any two of the above numerical values.

### [Ester polymer]

In some embodiments, the liquid-absorbing polymer includes the ester polymer, where the ester polymer is made into a sheet structure; and the sheet structure is subjected to a dynamic frequency scanning test at (Tₘ₃+20)°C to obtain an elasticity modulus G'-loss modulus G" curve, a slope of the elasticity modulus G'-loss modulus G" curve is K₂, 1<K₂<∞, and Tₘ₃°C represents a melting temperature of the ester polymer.

When the ester polymer of the embodiment of the present application meets the above range, an entanglement state of the molecular chains may be further reduced, which is beneficial to the diffusion of solvent molecules in the electrolyte between the molecular chains; and the ester polymer still maintains a certain molecular chain entanglement state, and can form a gel-like substance with the electrolyte, the liquid absorption rate can be improved, and the cycle performance and storage performance of the battery cell are improved.

In some embodiments, 1<K₂≤100; and optionally, 1<K₂≤10.

Exemplarily, K₂ may be 1.01, 1.1, 1.2, 1.5, 2, 5, 10, 15, 20, 30, 50, 100, 200, 500, 1000, 5000, 10000, or a range composed of any two of the above numerical values.

In some embodiments, a glass-transition temperature of the ester polymer is T_{g3} and has a unit of °C, -100≤T_{g3}≤50; and optionally, -80≤T_{g3}≤30.

Exemplarily, the glass-transition temperature of the ester polymer may be -100°C, -90°C, -80°C, -60°C, -30°C, 0°C, 30°C, 50°C, or a range composed of any two of the above numerical values.

In some embodiments, the ester polymer includes a building block represented by Formula (CI),

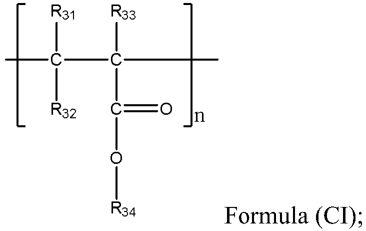

In Formula (CI), R₃₁, R₃₂ and R₃₃ each independently include a hydrogen atom, or a substituted or unsubstituted C1-C8 alkyl group; R₃₄ includes a substituted or unsubstituted C1-C8 alkyl group, or a substituted or unsubstituted C1-C8 hydroxyalkyl group; and optionally, R₃₄ include a substituted or unsubstituted C1-C6 alkyl group, or a substituted or unsubstituted C1-C6 hydroxyalkyl group.

Optionally, R₃₁ includes a hydrogen atom, or a substituted or unsubstituted methyl.

Optionally, R₃₂ and R₃₃ each independently include a hydrogen atom.

Optionally, R₃₄ includes a substituted or unsubstituted C1-C4 alkyl group, or a substituted or unsubstituted C1-C4 hydroxyalkyl group.

Exemplarily, the ester polymer includes at least one of a building block represented by Formula (CI-1) to a building block represented by Formula (CI-15),

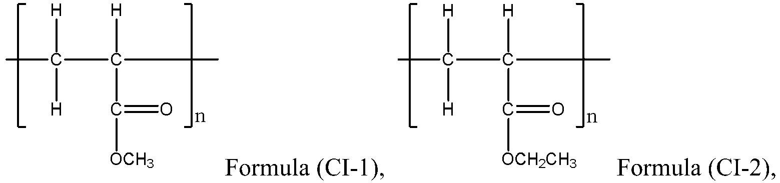

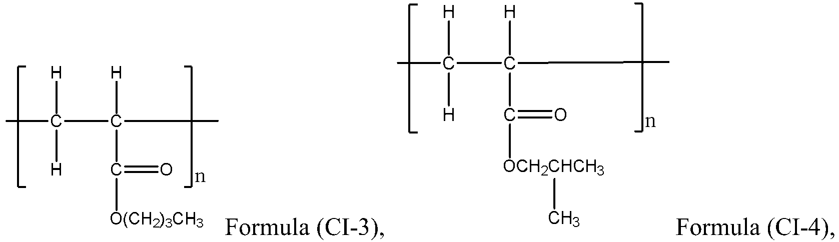

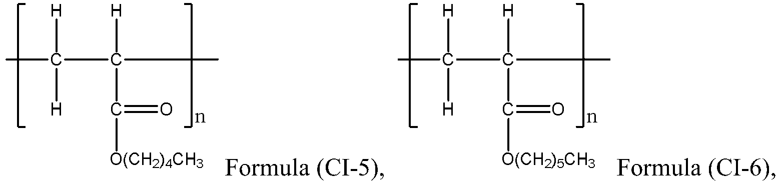

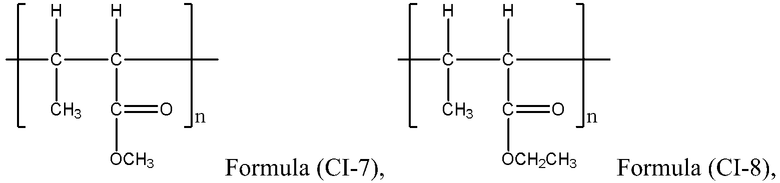

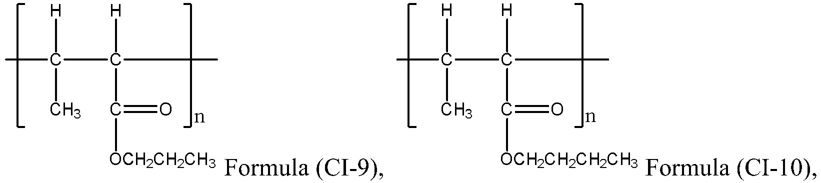

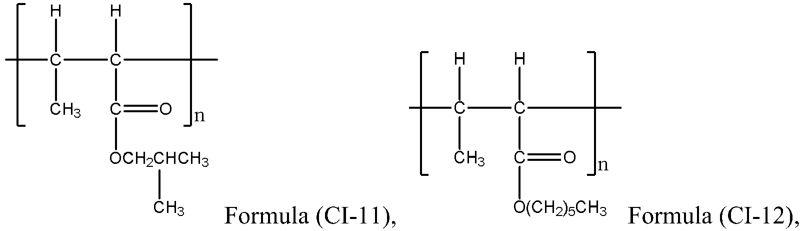

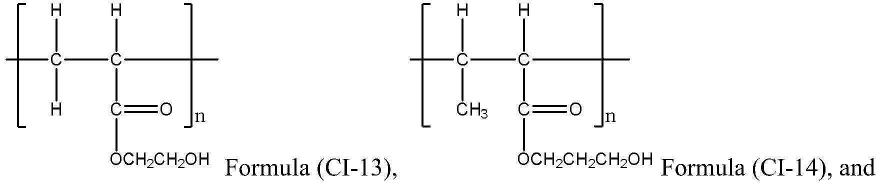

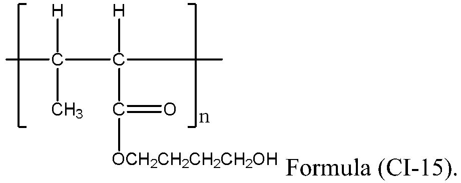

In some embodiments, the ester polymer includes a building block represented by Formula (CII),

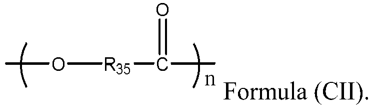

In Formula (CII), R₃₅ includes substituted or unsubstituted C2-C6 methylene.

Optionally, R₃₅ each independently includes substituted or unsubstituted C2-C4 methylene.

Exemplarily, the ester polymer includes at least one of a building block represented by Formula (CII-1) to a building block represented by Formula (CII-5), 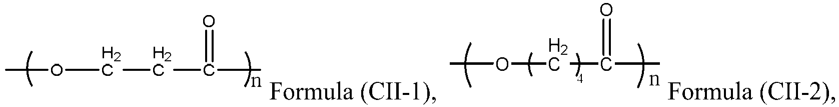 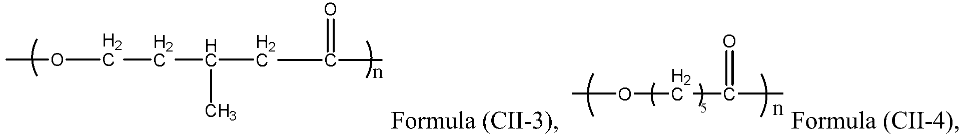 and

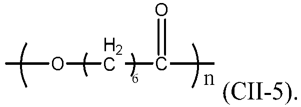

The molecular chains of the above-mentioned ester polymers have a low degree of entanglement, which is beneficial to improving the flexibility of the molecular chains. The molecular chains can fully stretch in the electrolyte and easily form a gel-like substance with the electrolyte.

The above polymers are merely examples of structural groups of the main molecular chain. In the embodiment of the present application, the polymer may also be obtained by copolymerizing the above structural groups with other types of structural groups (for example, olefin building blocks, acrylonitrile building blocks, maleic anhydride and other monomers with function groups).

When the above groups are substituted, a substituent group may include one or more of a nitrile group, a nitro group, a sulfonyl group, a carboxyl group, an ester group, a chlorine atom, a fluorine atom and a bromine atom. The above substituent groups are high pressure resistant substituent groups and are more conducive to stabilizing the structure of the polymer.

In some embodiments, the polymerization degree n of the ester polymer is selected from positive integers in a range from 800 to 20000.

Optionally, the polymerization degree n of the ester polymer is selected from positive integers in a range from 1000 to 15000.

In some embodiments, the polymer has a molecular weight ranging from 1.2×10⁵ g/mol to 1.0×10⁶ g/mol.

Exemplarily, the molecular weight of the polymer may be 1.2×10⁵ g/mol, 2×10⁵ g/mol, 5×10⁵ g/mol, 8×10⁵ g/mol, 1×10⁶ g/mol, 1.5×10⁶ g/mol, or a range composed of any two of the above numerical values.

### [Ketone-aldehyde polymer]

In some embodiments, the liquid-absorbing polymer includes the aldehyde-ketone polymer, where the aldehyde-ketone polymer is made into a sheet structure; and the sheet structure is subjected to a dynamic frequency scanning test at (Tₘ₄+20)°C to obtain an elasticity modulus G'-loss modulus G" curve, a slope of the elasticity modulus G'-loss modulus G" curve is K₃, 0.8≤K₃<∞, and Tₘ₄°C represents a melting temperature of the aldehyde-ketone polymer.

In some embodiments, 0.8≤K₃≤100; and optionally, 0.8≤K₃≤10.

Exemplarily, K₃ may be 0.8, 0.9, 1, 2, 5, 10, 15, 20, 30, 50, 100, 200, 500, 1000, 5000, 10000, or a range composed of any two of the above numerical values.

In some embodiments, a glass-transition temperature of the aldehyde-ketone polymer is T_{g4} and has a unit of °C, -100≤T_{g4}≤50; and optionally, -80≤T_{g4}≤30.

Exemplarily, the glass-transition temperature of the aldehyde-ketone polymer may be -100°C, -90°C, -80°C, -60°C, -30°C, 0°C, 30°C, 50°C, or a range composed of any two of the above numerical values.

In some embodiments, the aldehyde-ketone polymer includes a building block represented by Formula (DI),

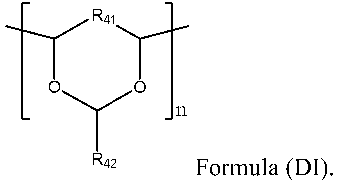

In Formula (DI), R₄₁ includes a single bond, and a substituted or unsubstituted C1-C6 methylene; R₄₂ includes a hydrogen atom, and a substituted or unsubstituted C1-C6 alkyl group;

Optionally, R₄₁ includes a single bond, and a substituted or unsubstituted C1-C2 methylene.

Optionally, R₄₂ includes a hydrogen atom, and a substituted or unsubstituted C1-C3 alkyl group.

In the embodiment of the present application, the single bond indicates that a group does not exist, and the atoms on both sides of the group are connected by a single bond. For example, R₄₁ is a single bond, which indicates that carbon atoms on both sides of R₄₁ are connected by a single bond.

Exemplarily, the aldehyde-ketone polymer includes at least one of a building block represented by Formula (DI-1) to a building block represented by Formula (DI-6),

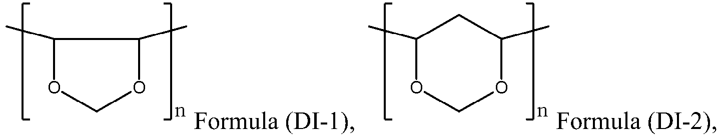

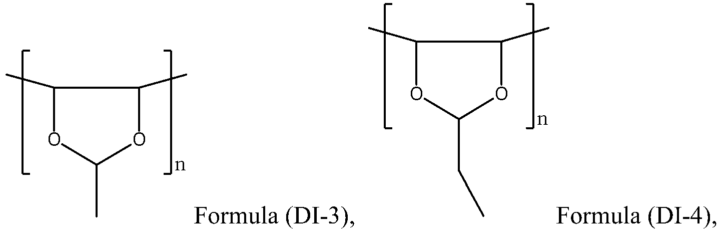

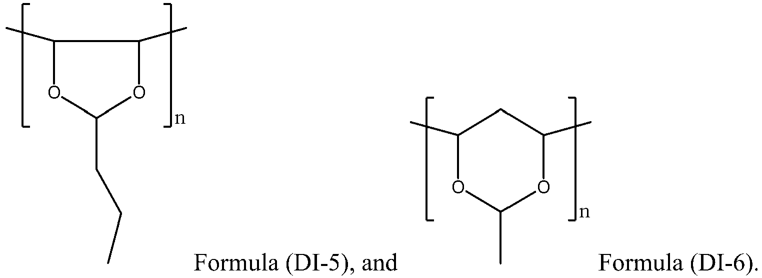

Exemplarily, the aldehyde-ketone polymer includes a building block represented by Formula (DII),

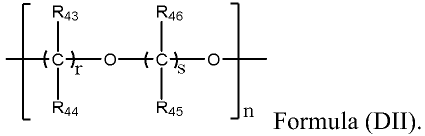

**In** Formula (DII), R₄₃ to R₄₆ each independently include a hydrogen atom, a hydroxyl group, a substituted or unsubstituted C1-C3 alkyl group, a substituted or unsubstituted C1-C3 hydroxyalkyl group, or a substituted or unsubstituted C1-C3 alkoxy group; r and s are each independently selected from integers in a range from 0 to 5, and at least one of r and s is selected from a positive integer. Optionally, R₄₃ to R₄₆ each independently include a hydrogen atom, a hydroxyl group, a substituted or unsubstituted C1-C3 alkyl group, a substituted or unsubstituted C1-C2 hydroxyalkyl group, or a substituted or unsubstituted C1-C2 alkoxy group.

In some embodiments, the aldehyde-ketone polymer includes at least one of a building block represented by Formula (DII-1) to a building block represented by Formula (DII-4), 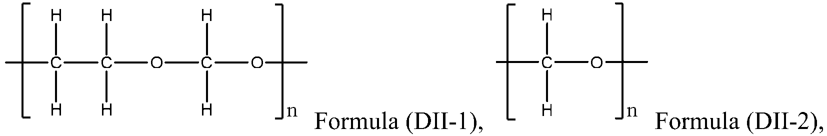 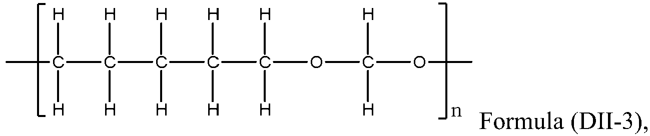 and

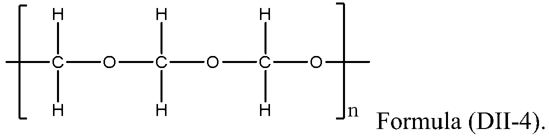

The molecular chains of the above-mentioned aldehyde-ketone polymers have a low degree of entanglement, which is beneficial to improving the flexibility of the molecular chains. The molecular chains can fully stretch in the electrolyte and easily form a gel-like substance with the electrolyte.

The above polymers are merely examples of structural groups of the main molecular chain. In the embodiment of the present application, the polymer may also be obtained by copolymerizing the above structural groups with other types of structural groups (for example, olefin building blocks, enol building blocks, acrylonitrile building blocks, and the like).

When the above groups are substituted, a substituent group may include one or more of a nitrile group (-CN), a nitro group, a sulfonyl group, a carboxyl group, an ester group, a chlorine atom, a fluorine atom and a bromine atom. The above substituent groups are high pressure resistant substituent groups and are more conducive to stabilizing the structure of the polymer.

In some embodiments, the polymerization degree n of the aldehyde-ketone polymer is selected from positive integers in a range from 500 to 15000.

Optionally, the polymerization degree n of the aldehyde-ketone polymer is selected from positive integer in a range from 500 to 10000.

In some embodiments, the polymer has a molecular weight ranging from 1.2×10⁵ g/mol to 1.0×10⁶ g/mol.

Exemplarily, the molecular weight of the polymer may be 1.2×10⁵ g/mol, 2×10⁵ g/mol, 5×10⁵ g/mol, 8×10⁵ g/mol, 1×10⁶ g/mol, 1.0×10⁶ g/mol, or a range composed of any two of the above numerical values.

When the liquid-absorbing polymer in the embodiment of the present application further satisfies one or more of the following conditions, the use reliability and cycle performance of the battery cell can be further improved.

In some embodiments, the liquid-absorbing polymer is added into a first solvent at 70°C to form a polymer system; the polymer system is allowed to stand at 70°C for 8 h and at 25°C for ≥24 h. After two stages of standing treatment, a portion of the polymer system is transformed into a gel-like substance through swelling and adsorption, and then the polymer system is filtered through a 200-mesh filter to leave a remaining first substance. A mass of the liquid-absorbing polymer is q and has a unit of g. A mass of the first substance is m and has a unit of g. The polymer and the first substance satisfy: 5≤m/q≤1000; optionally, 10≤m/q≤1000; and further optionally, 10≤m/q≤50. Exemplarily, m/q may be 5, 10, 20, 25, 28, 30, 32, 35, 40, 50, 80, 100, 200, 500, 1000, or a range composed of any two of the above numerical values.

Exemplarily, based on a mass of the polymer system, a ratio of a mass content of the liquid-absorbing polymer to a mass content of the first solvent ranges from 1:100 to 1:10, such as 3:50.

Exemplarily, the first solvent is the same as or similar to the solvent of the electrolyte, and the first solvent may include at least one of a carbonate solvent and an ether solvent. For example, the carbonate solvent includes a cyclic carbonate solvent and/or a linear carbonate solvent.

As examples of the cyclic carbonate solvent, the cyclic carbonate solvent includes one or more of ethylene carbonate (EC), vinylene carbonate (VC), fluoroethylene carbonate (FEC), difluoroethylene carbonate (DFEC), vinyl ethylene carbonate (VEC), and dicaprylyl carbonate (CC).

As examples of the linear carbonate solvent, the linear carbonate solvent includes one or more of dimethyl carbonate (DMC), diethyl carbonate (DEC), ethyl methyl carbonate (EMC), diphenyl carbonate (DPC), methyl allyl carbonate (MAC), and polycarbonate (VA).

As examples of the ether solvent, the ether solvent includes one or more of tetrahydrofuran (THF), 2-methyltetrahydrofuran (2me-tht), 1,3-dioxolane (DOL), dimethoxymethane (DMM), 1,2-dimethoxyethane (DME), and diglyme (DG).

Optionally, the first solvent may also contain both lithium salt and an electrolyte additive, such as lithium hexafluorophosphate, vinylene carbonate (VC), fluorovinylene carbonate (FEC), and the like.

In the present application, m/q is also referred to as a precipitation value, which represents the capability of the liquid-absorbing polymer and the solvent to transform into a gel-like substance.

The first substance mainly includes the gel-like substance formed by the liquid-absorbing polymer and the first solvent. In this type of gel-like substance, a molecular structure of the polymer may not change substantially.

In some embodiments, the first substance is dried at 80°C for 12 h to remove the first solvent in the first substance, and the first substance is mainly composed of the liquid-absorbing polymer described above after drying, as determined by infrared spectrophotometry (IR) or nuclear magnetic resonance (NMR).

The relevant parameters of the liquid-absorbing polymer according to the embodiment of the present application may be detected by the following method.

The groups of the liquid-absorbing polymer in the embodiment of the present application may be detected by infrared spectrophotometry IR. Specifically, the liquid-absorbing polymer is tested by Thermo Nicolet Nexus 670 attenuated total reflection Fourier transform infrared spectrometer (FTIR-ATR), and then tested with reference to standard GB/T6040-2002, where a test range is: ATR method 600~4000 cm⁻¹; repeatability: ±2 cm⁻¹; resolution: better than 4 cm⁻¹; transmission depth 0.2-0.6 µm.

The structure of the liquid-absorbing polymer in the embodiment of the present application may be tested by nuclear magnetic resonance (NMR). Specifically, 1H NMR and 13C NMR are performed on a Varian Mercury Plus-400 nuclear magnetic resonance instrument, a test temperature is 20°C, TMS is used as an internal standard, CDCl₃is used as a solvent, and a proton resonance frequency is 400 MHz.

The polymer monomer type of the liquid-absorbing polymer of the embodiment of the present application (especially suitable for monomers that account for a relatively small proportion of the polymer) may be tested by pyrolysis-gas chromatography-mass spectrometry. The specific testing steps are as follows: 0.5 mg of the sample is accurately weighed, put into a sample cup, fixed onto a sample feeding rod, and then put into a pyrolyzer installed near a GC (gas chromatography) sample feeding port; after a temperature of the pyrolyzer reaches a set temperature, a sample feeding button is pressed, and the sample cup quickly falls into a core of a pyrolysis furnace by free fall; in the inert gas_{N2}atmosphere, the volatile components are instantly vaporized and carried into the gas chromatography column by the carrier gas for separation; and finally, detection is performed by a flame ionization detector (FID) or a mass spectrometer (MS) to obtain a gas chromatogram or a total ion flow diagram.

The molecular weight of the liquid-absorbing polymer in the embodiment of the present application has a meaning well known in the art, and may be measured using equipment and methods commonly used in the art, and it may be tested by gel permeation chromatography (GPC). The specific testing steps are: an appropriate amount of the sample to be tested (the sample concentration is sufficient to ensure 8%-12% shading) is taken, added into 20 ml of deionized water, and subjected to ultraviolet ultrasound for 5 min (53KHz/120W) to ensure that the sample is completely dispersed, and then the sample is measured according to GB/T19077-2016/ISO 13320:2009 standard.

Alternatively, a multi-angle laser light scattering (MALLS) instrument is used for testing, specifically, an instrument (Wyatt Technology Corporation, USA) of combining GPC with a Dawn Heleos II multi-angle laser light scattering device, an Optilab T-rEX refractive index (RI) detector and a Visco Star II viscometer is used. The test is carried out at 30°, using tetrahydrofuran as a mobile phase at a flow rate of 1.0 ml/min, and commercial software ASTRA6 is used to process the SEC-SAMLL data to obtain the molecular weight parameters.

When the liquid-absorbing polymer of the embodiment of the present application further satisfies one or more of the following conditions, the cycle performance of the battery cell can be further improved.

In some embodiments, the liquid-absorbing polymer is added at 70°C into the first solvent to form a polymer system; the polymer system is allowed to stand at 70°C for 8 h and at 25°C for ≥24 h; and after two stages of standing treatment, a portion of the polymer system is transformed into the gel-like substance through swelling and adsorption, and then the polymer system is filtered through a 200-mesh filter to leave a remaining first substance. The mass of the liquid-absorbing polymer is q and has a unit of g. A mass of the first substance is m and has a unit of g. The liquid-absorbing polymer and the first substance satisfy: 5≤m/q≤1000; optionally, 10≤m/q≤1000; and further optionally, 10≤m/q≤50. Exemplarily, m/q may be 5, 10, 20, 25, 28, 30, 32, 35, 40, 50, 80, 100, 200, 500, 1000, or a range composed of any two of the above numerical values.

Exemplarily, based on the mass of the polymer system, a ratio of the mass content of the polymer to the mass content of the first solvent ranges from 1:100 to 1:10, such as 3:50.

Exemplarily, the first solvent is the same as or similar to the solvent of the electrolyte, and the first solvent may include at least one of a carbonate solvent and an ether solvent. For example, the carbonate solvent includes a cyclic carbonate solvent and/or a linear carbonate solvent.

As examples of the cyclic carbonate solvent, the cyclic carbonate solvent includes one or more of ethylene carbonate (EC), vinylene carbonate (VC), fluoroethylene carbonate (FEC), difluoroethylene carbonate (DFEC), vinyl ethylene carbonate (VEC), and dicaprylyl carbonate (CC).

As examples of the linear carbonate solvent, the linear carbonate solvent includes one or more of dimethyl carbonate (DMC), diethyl carbonate (DEC), ethyl methyl carbonate (EMC), diphenyl carbonate (DPC), methyl allyl carbonate (MAC), and polycarbonate (VA).

As examples of the ether solvent, the ether solvent includes one or more of tetrahydrofuran (THF), 2-methyltetrahydrofuran (2me-tht), 1,3-dioxolane (DOL), dimethoxymethane (DMM), 1,2-dimethoxyethane (DME), and diglyme (DG).

Optionally, the first solvent may also contain both lithium salt and an electrolyte additive, such as lithium hexafluorophosphate, vinylene carbonate (VC), fluorovinylene carbonate (FEC), and the like.

In the present application, m/q is also referred to as a precipitation value, which represents the capability of the liquid-absorbing polymer and the solvent to transform into a gel-like substance.

The first substance mainly includes the gel-like substance formed by the liquid-absorbing polymer and the first solvent. In this type of gel-like substance, a molecular structure of the liquid-absorbing polymer may not change substantially.

In some embodiments, the first substance is dried at 80°C for 12 h to remove the first solvent in the first substance, and the first substance is mainly composed of the liquid-absorbing polymer described above after drying, as determined by infrared spectrophotometry (IR) or nuclear magnetic resonance (NMR).

The embodiments of the present application may achieve the stretching of molecular chains of the liquid-absorbing polymer within a safe operating temperature range of the battery cell by increasing the temperature, thereby promoting the mutual attraction and physical combination of the polymer molecular chains and the electrolyte. At the room temperature, the activity of the molecular chain segments of the liquid-absorbing polymer is reduced, and they remain attached to a surface of the separator body and lock the electrolyte in a spatial environment where the liquid-absorbing polymer is located, and a gel or a gel-like state is formed, which can increase the transmission rate of active ions such as lithium ions and improve the cycle performance and storage performance.

In an embodiment of the present application, the separator includes a separator body and a polymer layer, and the polymer layer is arranged on at least one surface of the separator body, which means that the polymer layer may be arranged on one surface of the separator body or on two surfaces of the separator body. Since the separator body has various structural forms, and correspondingly, the polymer layer has various arrangement forms. The liquid-absorbing polymer may be dispersed in a solvent to form a polymer mixed system, and the polymer mixed system is coated on the separator body through a coating process such as atomization spraying, gravure coating, etc.

In some embodiments, the separator body includes a substrate, and the polymer layer is arranged on at least one surface of the substrate.

In some other embodiments, the separator body includes a substrate and a heat-resistant coating, the heat-resistant coating is arranged on at least one surface of the substrate, and the polymer layer is arranged on a surface of the heat-resistant coating facing away from the substrate. It can be understood that the heat-resistant coating may be arranged on one surface of the substrate, or on two surfaces of the substrate.

The embodiment of the present application has no particular restrictions on the material of the substrate, and any known substrate with good chemical stability and mechanical stability may be selected. For example, the substrate may include at least one of a porous polyolefin-based resin film (such as at least one of polyethylene, polypropylene, or polyvinylidene fluoride), a porous glass fiber, and a porous non-woven fabric. The substrate may be a single-layer film or a multi-layer composite film. When the substrate is the multi-layer composite film, the materials of the layers may be the same or different.

In some embodiments, the porosity of the substrate is greater than or equal to 25%; optionally, 25% to 50%. When the porosity of the substrate is within the above range, an air permeability of the substrate may be improved, which is beneficial to the migration of the active ions. Moreover, since the porosity is relatively small, mechanical properties of the substrate may also be improved, and a good support effect may be provided for the polymer layer.

In some embodiments, the substrate has a thickness which may be less than or equal to 16 µm, optionally, 5 µm to 12 µm. Exemplarily, the thickness of the substrate may be 1 µm, 2 µm, 3 µm, 5 µm, 10 µm, 12 µm, 15 µm, 16 µm, or a range composed of any two of the above numerical values.

The heat-resistant coating may include heat-resistant particles. In some embodiments, the heat-resistant particles include at least one of inorganic particles and organic particles. By adding the heat-resistant particles, heat resistance of the separator may be improved.

In some embodiments, a mass percentage content of the inorganic particles in the heat-resistant coating is ≤30. Exemplarily, the mass percentage content of the inorganic particles in the heat-resistant coating is 1%, 2%, 3%, 4%, 5%, 6%, 7%, 8%, 9%, 10%, 15%, 20%, 25%, 30%, or a range composed of any two of the above numerical values.

The inorganic particles may include at least one of inorganic particles having a dielectric constant of 5 or greater than 5, inorganic particles having active ion conductivity, and inorganic particles capable of undergoing electrochemical oxidation and reduction.

In some embodiments, the inorganic particles having a dielectric constant of 5 or greater than 5 may include at least one of boehmite (γ-AlOOH), aluminum oxide (Al₂O₃), barium sulfate (BaSO₄), magnesium oxide (MgO), magnesium hydroxide (Mg(OH)₂), silicon oxide SiOₓ(0 < x≤2), tin dioxide (SnO₂), titanium oxide (TiO₂), calcium oxide (CaO), zinc oxide (ZnO), zirconium oxide (ZrO₂), yttrium oxide (Y₂O₃), nickel oxide (NiO), hafnium dioxide (HfO₂), cerium oxide (CeO₂), zirconium titanate (ZrTiO₃), barium titanate (BaTiO₃), magnesium fluoride (MgF₂), Pb(Zr,Ti)O₃ (abbreviated as PZT), Pb₁₋ₘLaₘZr₁₋ₙTiₙO₃ (abbreviated as PLZT, 0<m<1, 0<n<1) and Pb(Mg₃Nb_{2/3})O₃-PbTiO₃ (abbreviated as PMN-PT).

In some embodiments, the inorganic particles having active ion conductivity may include at least one of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}type glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂type glass (LiₓSi_{y}S_{z}, 0<x<3, 0<y<2, 0<z<4) and P₂S₅ type glass (LiₓP_{y}S_{z}, 0<x<3, 0<y<3, 0<z<7).

In some embodiments, the inorganic particles capable of undergoing an electrochemical oxidation and reduction may include at least one of lithium-containing transition metal oxides, lithium-containing phosphates of an olivine structure, carbon-based materials, silicon-based materials, tin-based materials, and lithium-titanium compounds.

In some embodiments, the heat-resistant coating may also include other organic particles, for example, the organic particles may include at least one of polystyrene, polyethylene, polyimide, melamine resin, phenolic resin, polypropylene, polyester (e.g., polyethylene terephthalate, polyethylene naphthalate, polybutylene terephthalate), polyphenylene sulfide, polyaramide, polyamideimide, polyimide, copolymer of butyl acrylate and ethyl methacrylate, and mixtures thereof.

In some embodiments, the heat-resistant coating may further include a binder. As an example, the binder may include at least one of aqueous solution type acrylic resin (for example, homopolymer of acrylic acid, methacrylic acid, sodium acrylate monomer or copolymer with other comonomers), polyvinyl alcohol (PVA), isobutylene-maleic anhydride copolymer and polyacrylamide.

In some embodiments, the heat-resistant coating has a thickness of ≤4 µm. Therefore, an energy density of the battery cell is better improved. In the embodiment of the present application, the thickness of the heat-resistant coating refers to a thickness of the heat-resistant coating located on a single side of the substrate. Exemplarily, the thickness of the heat-resistant coating may be 0.1 µm, 0.5 µm, 1 µm, 1.5 µm, 2 µm, 2.5 µm, 3 µm, 3.5 µm, 4 µm, or a range composed of any two of the above numerical values.

In some embodiments, the polymer layer may further include heat-resistant particles. The heat-resistant particles and the liquid-absorbing polymer may work synergistically to further improve the overall heat resistance and ion transmission performance of the separator. The liquid-absorbing polymer and the heat-resistant particles may be dispersed in a solvent to form a polymer mixed system, and the polymer mixed system is coated on the separator body through a coating process such as atomization spraying, gravure coating, etc.

In some embodiments, based on a total mass of the polymer layer, a ratio of a mass percentage content of the liquid-absorbing polymer to a mass percentage content of the heat-resistant particles is (0.2 to 5.0):1; and optionally, (0.5 to 2.0):1. When the contents of the heat-resistant particles and the liquid-absorbing polymer are within the above range, the overall heat resistance and ion transmission performance of the separator can be further improved. Exemplarily, the ratio of the mass percentage content of the liquid-absorbing polymer to the mass percentage content of the heat-resistant particles may be 0.2:1, 0.3:1, 0.4:1, 0.5:1, 0.6:1, 0.8:1, 1.0:1, 1.2:1, 1.5:1, 1.8:1, 2.0:1, 2.5:1, 2.8:1, 3.0:1, 3.2:1, 3.5:1, 3.8:1, 4.0:1, 4.2:1, 4.5:1, 4.8:1, 5.0:1, or a range composed of any two of the above numerical values.

In some embodiments, the polymer layer may have a thickness ranging from 0.5 µm to 3.0 µm; and optionally, 1.0 µm to 2.0 µm. When the thickness of the polymer layer is within the above range, the overall heat resistance and ion transmission performance of the separator can be further improved. Exemplarily, the thickness of the polymer layer may be 0.5 µm, 0.8 µm, 1.0 µm, 1.2 µm, 1.5 µm, 1.8 µm, 2.0 µm, 2.3 µm, 2.5 µm, 2.8 µm, 3.0 µm, or a range composed of any two of the above numerical values.

### Battery cell

In a second aspect, an embodiment of the present application provides a battery cell. The battery cell includes an electrode assembly and an electrolyte, wherein the electrode assembly includes a positive electrode sheet, a negative electrode sheet and a separator, the separator is arranged between the positive electrode sheet and the negative electrode sheet, and the separator includes the separator according to any embodiment of the first aspect of the present application.

### [Positive electrode sheet]

The positive electrode sheet includes a positive current collector and a positive active substance layer arranged on at least one surface of the positive current collector.

As an example, the positive current collector has two surfaces opposite in its own thickness direction, and the positive active substance layer is arranged on either one or both of the two opposite surfaces of the positive current collector.

The positive active substance layer includes a positiveactive substance. The positive active substance may be a positive active substance for a battery cell known in the art. As an example, the positive active substance may include at least one of the following materials: a lithium-containing phosphate compound, a lithium-containing transition metal oxide, a sodium-containing phosphate compound and a sodium-containing transition metal oxide.

Exemplarily, a general formula of an olivine-type phosphate active substance (lithium-containing phosphate compound) is: LiₓA_{y}MeₐM_{b}P_{1-c}X_{c}Y_{z}, wherein 0≤x≤1.3, 0≤y≤1.3, and 0.9≤x+y≤1.3; 0.9≤a≤1.5, 0≤b≤0.5, and 0.9≤a+b≤1.5; 0≤c≤0.5; 3≤z≤5; A includes one or more of Na, K, and Mg; Me includes one or more of Mn, Fe, Co, and Ni; M includes one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X includes one or more of S, Si, Cl, B, C, and N; and Y includes one or more of O and F. Specifically, the olivine-type phosphate active substance includesone or more of LiFePO₄, LiMnPO₄, LiNiPO₄, and LiCoPO₄.

Exemplarily, lithium transition metal oxides (layered materials such as ternary, lithium/sodium nickel oxide, lithium/sodium cobalt oxide, lithium/sodium manganese oxide, lithium-rich layered and rock salt phase layered materials). A general formula of the positive active substance of the layered structure is: LiₓA_{y}NiₐCo_{b}Mn_{c}M_{(1-a-b-c)}Y_{z}, where 0≤x≤2.1, 0≤y≤2.1, and 0.9≤x+y≤2.1; 0≤a≤1, 0≤b≤1, 0≤c≤1, and 0.1≤a+b+c≤1; 1.8≤z≤3.5; A includes one or more of Na, K and Mg; M includes one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y includes one or more of O and F. Optionally, y=0. Specifically, the positive active substance of the layered structure may include one or more of lithium cobalt oxide (LCO), lithium nickel oxide (LNO), lithium manganese oxide (LMO), LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811) and NCA.

In some embodiments, the positive current collector may be a metal foil or a composite current collector. As an example of the metal foil, an aluminum foil or an aluminum alloy foil may be used. The composite current collector may include a high molecular material base layer and a metal material layer formed on at least one surface of the high molecular material base layer. As an example, the metal material layer may includes one of aluminum, aluminum alloy, nickel, nickel alloy, titanium, titanium alloy, solver and silver alloy, or a combination of some of them, and the high molecular material base layer may include one of polypropylene (PP), polyethylene terephthalate (PET), polybutylene terephthalate (PBT), polystyrene (PS) and polyethylene (PE), or a combination of some of them.

In some embodiments, the positive active substance layer further optionally includes a positive conductive agent. In the embodiment of the present application, a type of the positive conductive agent is not specifically limited. As an example, the positive conductive agent includes one of superconducting carbon, conductive carbon black, conductive graphite, acetylene black, carbon black, Ketjen black, carbon dots, carbon nanotubes, graphene, and carbon nanofibers, or a combination of some of them. In some embodiments, based on a total mass of the positive active substance layer, a mass percentage content of the positive conductive agent is below 5%.

In some embodiments, the positive active substance layer further optionally includes a positive binder. In the embodiment of the present application, a type of the positive binder is not specifically limited. As an example, the positive binder may include one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorinated acrylate resin, or a combination of some of them. In some embodiments, based on the total mass of the positive active substance layer, a mass percentage content of the positive binder is below 5%. Compared with the crystallinity of the fluoropolymer in the embodiment of the present application, a crystallinity of the positive binder is higher. Compared with the melting temperature of the fluoropolymer in the embodiment of the present application, a melting temperature of the positive binder is higher.

The positive active substance layer is usually formed by applying positive slurry onto the positive current collector followed by drying and cold pressing. The positive slurry is generally formed by dispersing the positive active substance, the optional conductive agent, the optional binder and any other components in a solvent and uniformly stirring the mixture. The solvent may be N-methyl pyrrolidone (NMP), but is not limited thereto. Certainly, the preparation of the positive electrode sheet is not limited to the above method, and the preparation method described above may also be used.

### [Negative electrode sheet]

In some embodiments, the negative electrode sheet includes a negative current collector and a negative active substance layer arranged on at least one surface of the negative current collector and including a negative active substance.

Exemplarily, the negative current collector has two surfaces opposite in its own thickness direction, and the negative active substance layer is arranged on either one or both of the two opposite surfaces of the negative current collector.

The negative active substance may be a negative active substance for the battery cell known in the art. As an example, the negative active substance may include, but not limited to, at least one of natural graphite, artificial graphite, soft carbon, hard carbon, a silicon-based material, a tin-based material, and lithium titanate. The silicon-based material may include at least one of elemental silicon, a silicon oxide, a silicon-carbon composite, a silicon-nitrogen composite, and a silicon alloy material. The tin-based material may include at least one of elemental tin, a tin oxide, and a tin alloy material.

In some embodiments, the negative active substance layer further optionally includes a negative conductive agent. In the embodiment of the present application, a type of the negative conductive agent is not specifically limited. As an example, the negative conductive agent may include at least one of superconducting carbon, conductive graphite, acetylene black, carbon black, Ketjen black, carbon dots, carbon nanotubes, graphene, and carbon nanofibers. In some embodiments, based on a total mass of the negative active substance layer, a mass percentage content of the negative conductive agent is ≤5%.

In some embodiments, the negative active substance layer further optionally includes a negative binder. In the embodiment of the present application, a type of the negative binder is not specifically limited. As an example, the negative binder may include at least one of styrene butadiene rubber (SBR), water-soluble unsaturated resin SR-1B, water-based acrylic resin (such as polyacrylic acid (PAA), polymethacrylic acid (PMAA), and polyacrylic acid sodium (PAAS)), polyacrylamide (PAM), polyvinyl alcohol (PVA), sodium alginate (SA), and carboxymethyl chitosan (CMCS). In some embodiments, based on the total mass of the negative active substance layer, a mass percentage content of the negative binder is ≤5%.

In some embodiments, the negative active substance layer further optionally includes other auxiliaries. As an example, the other auxiliaries may include thickeners, such as, carboxymethyl cellulose sodium (CMC), a PTC thermistor material, and the like. In some embodiments, based on the total mass of the negative active substance layer, a mass percentage content of the other auxiliaries is ≤2%.

In some embodiments, the negative current collector may be a metal foil or a composite current collector. As an example of the metal foil, a copper foil may be used. The composite current collector may include a high molecular material base layer and a metal material layer formed on at least one surface of the high molecular material base layer. As an example, the metal material may include at least one of copper, a copper alloy, nickel, a nickel alloy, titanium, a titanium alloy, silver, and a silver alloy. As an example, the high molecular material base layer may include at least one of polypropylene (PP), polyethylene terephthalate (PET), polybutylene terephthalate (PBT), polystyrene (PS), and polyethylene (PE).

The negative active substance layer is usually formed by applying negative slurry onto the negative current collector followed by drying and cold pressing. The negative slurry is generally formed by dispersing the negative active substance, the optional conductive agent, the optional binder and optional other auxiliaries in a solvent and uniformly stirring the mixture. The solvent may be N-methyl pyrrolidone (NMP) or deionized water, but not limited thereto. Certainly, the preparation of the negative electrode sheet is not limited to the above method, and the preparation method described above may also be used.

The negative electrode sheet does not exclude other additional functional layers other than the negative active substance layer. For example, in some embodiments, the negative electrode sheet in the present application further includes a conductive primer coating (e.g., composed of a conductive agent and a binder) sandwiched between the negative current collector and the negative active substance layer and arranged on a surface of the negative current collector. In some other embodiments, the negative electrode sheet of the present application further includes a protective layer covering a surface of the negative active substance layer.

### [Electrolyte]

During a charge and discharge process of the battery cell, the active ions are intercalated and deintercalated back and forth between the positive electrode sheet and the negative electrode sheet, and the electrolyte serves to conduct the active ions between the positive electrode sheet and the negative electrode sheet. The present application has no specific limitation on a type of the electrolyte, which may be selected according to actual demands.

The electrolyte comprises an electrolyte salt and a solvent. Types of the electrolyte salt and the solvent are not specifically limited, and may be selected according to actual demands.

When the battery cell of the present application is a lithium ion battery, as an example, the electrolyte salt may include, but not limited to, at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluoro bis(oxalato)phosphate (LiDFOP), and lithium tetrafluoro(oxalato)phosphate (LiTFOP).

When the battery cell of the present application is a sodium ion battery, as an example, the electrolyte salt may include, but not limited to, at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalate)borate (NaBOB), sodium difluorophosphate (NaPO₂F₂), sodium difluoro bis(oxalato)phosphate (NaDFOP), and sodium tetrafluoro(oxalato)phosphate (NaTFOP).

As an example, the solvent may include, but not limited to, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS), ethylsulfonylethane (ESE), tetrahydrofuran (THF), 2-methyltetrahydrofuran (2me-thf), 1,3-dioxolane (DOL), dimethoxymethane (DMM), 1,2-dimethoxyethane (DME), and diglyme (DG). at least one of.

In some embodiments, the electrolyte further optionally includes an additive. For example, the additive may include a negative film-forming additive, or may include a positive film-forming additive, and may further include an additive capable of improving certain performances of a battery, such as an additive for improving an overcharging performance of the battery, an additive for improving a high temperature performance of the battery, an additive for improving a low temperature power performance of the battery, etc.

In some embodiments, the positive electrode sheet, the separator, and the negative electrode sheet may be made into an electrode assembly by a winding process and/or a stacking process.

In some embodiments, the battery cell may include an outer package. The outer package may be used to encapsulate the above-mentioned electrode assembly and electrolyte.

In some embodiments, the outer package of the battery cell can be a hard shell, such as a hard plastic shell, an aluminum shell, and a steel shell. The outer package of the battery cell may also be a soft package, such as a bag-type soft package. A material of the soft package may be plastic, such as at least one of polypropylene (PP), polybutylene terephthalate (PBT), and polybutylene succinate (PBS).

In some embodiments, the positive electrode sheet, the separator, and the negative electrode sheet may be made into the electrode assembly by the winding process or the stacking process.

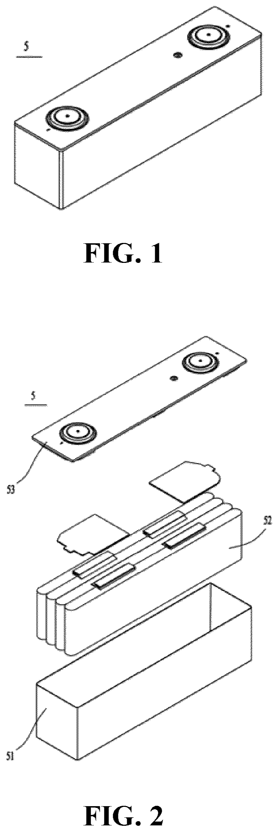

A shape of the battery cell is not particularly limited in the present application, and may be a cylinder shape, a square shape, or any other shape. For example, FIG. 1 shows a battery cell 5 of a square structure as an example.

In some embodiments, as shown in FIG. 1 and FIG. 2, the outer package may include a case 51 and a cover plate 53. The case 51 may include a bottom plate and a side plate connected to the bottom plate, and the bottom plate and the side plate enclose to form an accommodating cavity. The case 51 has an opening communicating with the accommodating cavity, and the cover plate 53 is configured to cover the opening to close the accommodating cavity. The positive electrode sheet, the negative electrode sheet, and the separator may form the electrode assembly 52 by the winding process or the stacking process. The electrode assembly 52 is encapsulated in the accommodating cavity. The electrode assembly 52 is impregnated with the electrolyte solution. A number of the electrode assembly 52 included in the battery cell 5 can be one or more, and can be adjusted according to requirements.

A preparation method for the battery cell of the present application is well known. In some embodiments, the positive electrode sheet, the separator, the negative electrode sheet, and the electrolyte may be assembled to form the battery cell. As an example, the positive electrode sheet, the separator, and the negative electrode sheet may form the electrode assembly by the winding process or the stacking process; the electrode assembly is placed in the outer package; the electrolyte is injected after drying; and the battery cell is obtained through processes such as vacuum encapsulation, standing, formation, and shaping.

In some embodiments of the present application, the battery cells according to the present application may be assembled into a battery module, there may be a plurality of battery cells included in the battery module, and the specific number may be adjusted according to the application and capacity of the battery module.

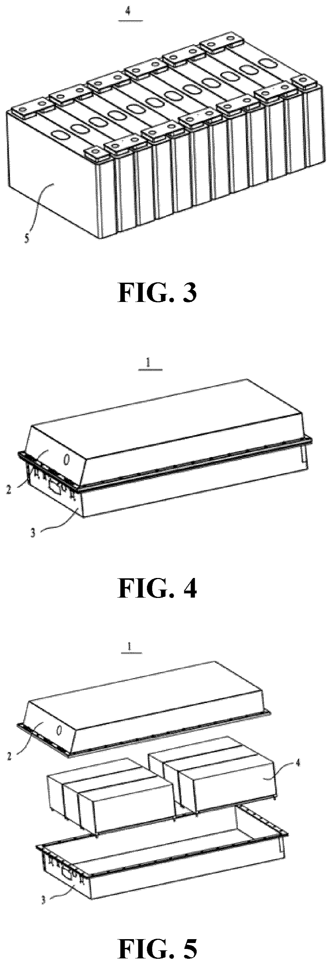

FIG. 3 is a schematic view of a battery module 4 as an example. As shown in FIG. 3, in the battery module 4, a plurality of battery cells 5 can be sequentially arranged in a length direction of the battery module 4. Of course, any other arrangements are also possible. The plurality of battery cells 5 may further be fixed by fasteners.

Optionally, the battery module 4 may further include a shell having an accommodating space, and the plurality of battery cells 5 are accommodated in the accommodating space.

In some embodiments, the aforementioned battery modules may further be assembled into a battery pack, and the number of battery modules included in the battery pack may be adjusted according to the application and capacity of the battery pack.

Both the battery module 4 and the battery pack may be used as specific examples of batteries in the embodiments of the present application.

FIG. 4 and FIG. 5 are schematic diagram of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3, where the upper box body 2 is configured to cover the lower box body 3 to form an enclosed space for accommodating the battery modules 4. The plurality of battery modules 4 may be arranged in the battery box in any manner.

### Electrical apparatus

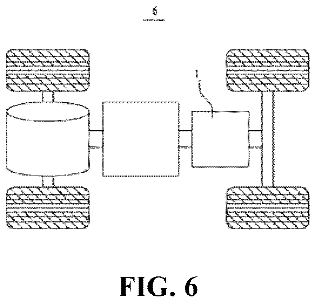

In a third aspect, the present application provides an electrical apparatus, and the electrical apparatus includes at least one of a battery cell, a battery module, or a battery pack of the present application. The battery cell, the battery module, or the battery pack may be used as a power source of the electrical apparatus, or may be used as an energy storage unit of the electrical apparatus. The electrical apparatus may be, but not limited to, a mobile device (such as a mobile phone and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc. For the electrical apparatus, the battery cell, the battery module, or the battery pack may be selected according to use requirements thereof. FIG. 6 is a schematic diagram of an electrical apparatus as an example. The electrical apparatus 6 is an all-electric vehicle, a hybrid electric vehicle, or a plug-in hybrid electric vehicle, etc. In order to meet the requirements of the electrical apparatus for high power and high energy density, the battery pack 1 or the battery module may be used. As another example, the electrical apparatus may be a mobile phone, a tablet personal computer, a laptop, etc. The electrical apparatus is generally required to be thin and light, and may use a battery cell as a power source.

### Embodiment

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Where no manufacturers are specified, the employed reagents or instruments are all commercially available conventional products.

### Embodiment 1 Preparation of a lithium ion battery

### (1) Preparation of a positive electrode sheet:

An aluminum foil with a thickness of 12 µm is used as a positive current collector.

A positive active substance LiNi_{0.6}Co_{0.2}Mn_{0.2}O₂ (NCM622), a conductive agent (carbon black), and a binder (polyvinylidene fluoride (PVDF)) are fully stired and mixed in an appropriate amount of N-methyl pyrrolidone (NMP) to form positive slurry. A mass ratio of NCM622 to the conductive carbon black to the PVDF to the N-methyl pyrrolidone (NMP) in the positive slurry is 97.5:1.4:1.1. The positive slurry is coated onto a current collector aluminum foil, dried under vacuum at 100°C, then cold pressed, then trimmed, sliced, slit, and then dried at 85°C under vacuum for 4 h, to obtain the positive electrode sheet.

### (2) Preparation of a negative electrode sheet:

A copper foil with a thickness of 8 µm is used as a negative current collector.

A negative active substance (artificial graphite), a conductive agent (carbon black), a binder (styrene butadiene rubber (SBR)), and a thickener (carboxymethylcellulose sodium (CMC)) are uniformly mixed at a weight ratio of 97.4:2:0.5:0.1 and then added into deionized water, to obtain negative slurry. The negative slurry is coated onto the current collector copper foil, dried at 85°C, cold-pressed, trimmed, sliced, slit, and then dried under vacuum at 120°C for 12 h to obtain the negative electrode sheet.

### (3) Preparation of electrolyte:

In an environment with a water content of less than 10 ppm, non-aqueous organic solvents (ethylene carbonate, ethyl methyl carbonate and dimethyl carbonate) are mixed in a volume ratio of 1:1:1 to obtain a solvent of an electrolyte, and then lithium salt LiPF₆ and the mixed solvent are mixed to obtain an electrolyte with a lithium salt concentration of 1 mol/L.

### (4) Preparation of a separator

A polyethylene (PE) film of 7 µm is used as a substrate.

A liquid-absorbing polymer is dispersed in dimethyl carbonate (DMC) solvent to form a mixed system, and the mixed system is atomized and sprayed on two surfaces of the polyethylene film to form polymer layers respectively. The atomizing solvent is water, and a mass content of the mixed system is 1%.

### (5) Preparation of a lithium ion battery:

The positive electrode sheet, the separator, and the negative electrode sheet mentioned above are stacked in order, so that the separator is positioned between the positive electrode sheet and the negative electrode sheet to play a role in separating, and then winding is performed so that an electrode assembly may be obtained; the electrode assembly is put into an outer package shell, and after drying, the electrolyte is injected; and the lithium ion battery is obtained through processes such as vacuum encapsulation, standing, formation, and shaping.

### Comparative example 1

A lithium ion battery is prepared by a method similar to that of Embodiment 1. The difference from Embodiment 1 is that a separator in Comparative Example 1 is a polyethylene (PE) film of 7 µm.

### Comparative example 2

A lithium ion battery is prepared by a method similar to that of Embodiment 1. The difference from Embodiment 1 is that a material of a liquid-absorbing polymer of a separator in Comparative Example 2 changes.

### Embodiment 1-2 to Embodiment 1-5

A lithium ion battery is prepared by a method similar to that of Embodiment 1. The difference from Embodiment 1 is that a coating weight of a polymer layer of a separator in Embodiment 1-2 and Embodiment 1-5 is adjusted.

### Embodiment 2-1 to Embodiment 2-3

A lithium ion battery is prepared by a method similar to that of Embodiment 1. The difference from Embodiment 1 is that a material of a liquid-absorbing polymer of a separator in Embodiment 2-1 and Embodiment 2-3 changes.

### Embodiment 3-1

A lithium ion battery is prepared by a method similar to that of Embodiment 1. The difference from Embodiment 1 is that a setting position of a polymer layer of a separator in Embodiment 4-1 is adjusted. Specifically, steps for preparing the separator include:

A polyethylene film (PE) of 7 µm is used as a separator substrate; and
silicon oxide compound particles and a binder (aqueous solution type polyacrylic acid) are uniformly mixed in a proper amount of solvent (deionized water) at a mass ratio of 20:80 to obtain coating slurry.

The prepared coating slurry is applied onto two surfaces of the PE substrate using a coater to form a heat-resistant coating.

The liquid-absorbing polymer is dispersed in a dimethyl carbonate (DMC) solvent to form a mixed system, and the mixed system is atomized and sprayed onto a surface of the heat-resistant coating to form a polymer layer, and thus a separator is obtained. The atomizing solvent is water, and a mass content of the mixed system is 1%.

### Embodiment 3-2 to Embodiment 3-6

A lithium ion battery is prepared by a method similar to that of Embodiment 1. The difference from Embodiment 1 is that a composition of a polymer layer of a separator in Embodiment 3-2 to Embodiment 3-6 is adjusted. Specifically, steps for preparing the separator include:
a polyethylene film (PE) of 7 µm is used as a separator substrate; and
silicon oxide compound particles and a liquid-absorbing polymer are dispersed in a dimethyl carbonate (DMC) solvent to form a mixed system, the mixed system is atomized and sprayed onto a surface of a heat-resistant coating to form a polymer layer, and thus a separator is obtained. A mass ratio of the silicon oxide compound particles to the liquid-absorbing polymer in Embodiment 4-2 is 1.5:1; a mass ratio of the silicon oxide compound particles to the liquid-absorbing polymer in Embodiment 4-3 is 0.5:1; a mass ratio of the silicon oxide compound particles to the liquid-absorbing polymer in Embodiment 4-4 is 2:1; a mass ratio of the silicon oxide compound particles to the liquid-absorbing polymer in Embodiment 4-5 is 0.2:1; and a mass ratio of the silicon oxide compound particles to the liquid-absorbing polymer in Embodiment 4-5 is 0.5:1.

Data of the embodiments and the comparative examples are as shown in Table 1.

### Test parts

### 1, Performance test of the lithium ion battery

### 45°C 1C/1C 1600 cycles capacity retention ratio

The lithium ion battery is charged to 4.25 V at 45°C at a constant current of 1C, then charged to a current of 1C at a constant voltage of 4.25 V, and then discharged to 2.8 V at a constant current of 1C, and this is one charge and discharge cycle. Based on the initial discharge capacity 100%, the capacity retention ratio of the battery after 1600 cycles is calculated. The capacity retention ratio (%) of the lithium ion battery after 1600 cycles is equal to (discharge capacity of the 1600th cycle/discharge capacity of the first cycle) × 100%.

### Test results

The test results are as shown in Table 1.

**Table 1**

| Item | Separator | | | | | | | | | | | | | | Lithium ion battery |
|---|---|---|---|---|---|---|---|---|---|---|---|---|---|---|---|
| | Liquid-retaining polymer | | | | | | | | | Polymer layer | | Porosity λ(%) | Liquid absorption rate v(mg/s) | | |
| | Monomer 1 | Monomer 2 | Crystallinity Xc% | Melting temperature Tm(°C) | Glass-transition temperature Tg(°C) | Molecular weight (g/mol) | K | Precipitati on value m/q | Coating weight (mg/1540. 25 mm²) | Thickness (um) | Contact angle (°) | | | ν / λ | 45°C 1C/1C 1600cycles capacity retention ratio |
| Comparative Example 1 | None | None | None | None | None | None | None | None | None | None | 48.0 | 35 | 1.1 | 3 .2 | 75% |
| Comparative Example 2 | 100% ethylene oxide | / | / | / | -67 | 400000 | 0.9 | 1.5 | 1.5 | 1 | 35 | 45 | 1.8 | 4 .1 | 78% |
| Embodiment 1 | 80% ethylene oxide | 20%2-ethyl ethylene oxide | / | / | -45 | 250000 | 1.2 | 12 | 1.5 | 1 | 14.6 | 45 | 7.5 | 1 6 .7 | 84% |
| Embodiment 1-2 | 80% ethylene oxide | 20%2-ethyl ethylene oxide | / | / | -45 | 250000 | 1.2 | 12 | 0.5 | 0.5 | 14.6 | 41 | 3.8 | 9 .2 | 80% |
| Embodiment 1-3 | 80% ethylene oxide | 20%2-ethyl ethylene oxide | / | / | -45 | 250000 | 1.2 | 12 | 1.0 | 0.75 | 14.6 | 43 | 6.2 | 1 4 .5 | 82% |
| Embodiment 1-4 | 80% ethylene oxide | 20%2-ethyl ethylene oxide | / | / | -45 | 250000 | 1.2 | 12 | 2.0 | 1.5 | 14.6 | 45 | 8.6 | 1 9 .1 | 85% |
| Embodiment 1-5 | 80% ethylene oxide | 20%2-ethyl ethylene oxide | / | / | -45 | 250000 | 1.2 | 12 | 2.5 | 2 | 14.6 | 48 | 10.8 | 2 2 .4 | 83% |
| Embodiment 2-1 | 90% vinylidene fluoride | 10% hexafluoro propylene | 20 | 125 | -50 | 600000 | / | 20 | 1.5 | 1.5 | 17.8 | 45 | 6.4 | 1 4 .3 | 82% |
| Embodiment 2-2 | 85% vinyl acetate | 15% ethylene | / | / | 0 | 180000 | 1.1 | 25 | 1.5 | 1.5 | 8.6 | 45 | 15.8 | 3 5 .1 | 86% |
| Embodiment 2-3 | 70% formaldehyde | 30% polyvinyl alcohol | / | / | 28 | 200000 | 1.1 | 12 | 1.5 | 1.5 | 10.2 | 45 | 11.1 | 2 4 .7 | 85% |
| Embodiment 4-1 | 80% ethylene oxide | 20%2-ethyl ethylene oxide | / | / | -45 | 250000 | 1.2 | 12 | 1.5 | 1.5 | 14.6 | 45 | 9.8 | 2 1 .8 | 86% |
| Embodiment 4-2 | 80% ethylene oxide | 20%2-ethyl ethylene oxide | / | / | -45 | 250000 | 1.2 | 12 | 1.5 | 1.5 | 18.3 | 45 | 8.3 | 1 8 .5 | 85% |
| Embodiment 4-3 | 80% ethylene oxide | 20%2-ethyl ethylene oxide | / | / | -45 | 250000 | 1.2 | 12 | 1.5 | 1.5 | 21.5 | 45 | 7.3 | 1 6 .3 | 82% |
| Embodiment 4-4 | 80% ethylene oxide | 20%2-ethyl ethylene oxide | / | / | -45 | 250000 | 1.2 | 12 | 1.5 | 1.5 | 16.7 | 45 | 9.1 | 2 0 .2 | 83% |
| Embodiment 4-5 | 80% ethylene oxide | 20%2-ethyl ethylene oxide | / | / | -45 | 250000 | 1.2 | 12 | 1.5 | 1.5 | 26.1 | 45 | 6.6 | 1 4 .7 | 81% |
| Embodiment 4-6 | 80% ethylene oxide | 20%2-ethyl ethylene oxide | / | / | -45 | 250000 | 1.2 | 12 | 1.5 | 1.5 | 21.5 | 45 | 7.3 | 1 6 .3 | 82% |

In Table 1, 80% ethylene oxide means that a molar percentage content of ethylene oxide is 80% based on a total molar amount of ethylene oxide and 2-ethyl ethylene oxide.

It can be seen from Table 1 that a contact angle of Comparative example 1 refers to a contact angle between a surface (substrate) of a separator and an electrolyte.

Compared with Comparative example 1, the embodiment of the present application adds the liquid-absorbing polymer of the present application to the separator, and the cycle performance of the lithium ion battery is improved. Although a polymer is added to the separator in Comparative example 2, 100% ethylene oxide does not have high liquid absorption, and the liquid absorption performance of the separator is poor, which basically cannot improve the cycle performance of the battery cell.

Compared with Comparative examples 1 and 2, the polymer layer is arranged on the surface of the separator in the embodiment of the present application, and the polymer layer is in contact with the electrolyte. The introduction of the liquid-absorbing polymer can accelerate the absorption of the electrolyte, increase the reabsorption rate of the electrolyte during the discharge process of the battery cell, accelerate the transmission rate of the electrolyte between the separator and the electrode sheet, reduce the liquid deficiency situation during the cyclic charge and discharge process, reduce the battery polarization, and improve the cycle performance of the battery cell. The liquid-absorbing polymer can construct a three-dimensional connected interface between the separator and the electrode sheet, so as to further improve the liquid absorption rate of the separator and the electrode sheet, and thus improve the cycle performance of the battery cell.

While the present application has been described with reference to the preferred embodiments, various modifications may be made and components thereof may be replaced with equivalents without departing from the scope of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A separator, comprising:
a separator body; and
a polymer layer arranged on at least one surface of the separator body and comprising a liquid-absorbing polymer,
wherein the separator satisfies: v/λ>5.00, and
λ represents a porosity of the separator; and
v represents a liquid absorption rate of the separator, and the unit of the liquid absorption rate is mg/s.

2. The separator according to claim 1, wherein the separator satisfies: 5<v/λ<50.

3. The separator according to claim 1 or 2, wherein a contact angle between the polymer layer and an electrolyte is in a range from 5° to 25°; wherein the electrolyte comprises lithium hexafluorophosphate and an organic solvent, a molar concentration of the lithium hexafluorophosphate is 1 mol/L, and the organic solvent comprises ethylene carbonate, ethyl methyl carbonate and dimethyl carbonate in a volume ratio of 1:1:1.

4. The separator according to any one of claims 1 to 3, wherein a coating weight of the liquid-absorbing polymer of the separator is in a range from 0.5 mg/1540.25 mm² to 5 mg/1540.25 mm².

5. The separator according to any one of claims 1 to 4, wherein the liquid-absorbing polymer comprises a fluoropolymer;
a crystallinity of the fluoropolymer measured through a differential scanning calorimetry is Xc₁, 0<Xc₁≤30%; and
a melting temperature of the fluoropolymer is Tₘ₁ and has a unit of °C, 0<Tₘ₁≤140.

6. The battery cell according to claim 5, wherein a glass-transition temperature of the fluoropolymer is T_{g1} and has a unit of °C, -150≤T_{g1}≤60.

7. The battery cell according to claim 5 or 6, wherein the fluoropolymer comprises at least one of a building block represented by Formula (AI) to a building block represented by Formula (AIII), 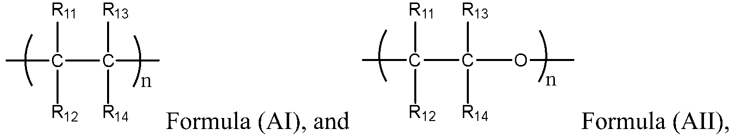
in Formula (AI) and Formula (AII), R₁₁, R₁₂, R₁₃ and R₁₄ each independently comprise a hydrogen atom, a fluorine atom, a chlorine atom, a substituted or unsubstituted C1-C3 alkyl group or a substituted or unsubstituted C1-C3 alkoxy group, and at least one of R₁₁, R₁₂, R₁₃ and R₁₄ comprises a fluorine atom; 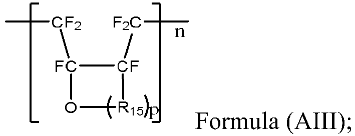
in Formula (AIII), R₁₅ comprises a single bond, and a substituted or unsubstituted C1-C3 alkyl group;
p is a positive integer selected from 1 to 3; and n is a positive integer selected from 1000 to 30000.

8. The battery cell according to any one of claims 1 to 7, wherein the liquid-absorbing polymer further comprises an ether polymer, wherein the ether polymer is made into a sheet structure; the sheet structure is subjected to a dynamic frequency scanning test at (Tₘ₂+20)°C to obtain an elasticity modulus G'-loss modulus G" curve, a slope of the elasticity modulus G'-loss modulus G" curve is K₁, 1<K₁<∞, and Tₘ₂°C represents a melting temperature of the ether polymer; optionally, 1<K₁≤100; and further optionally, 1<K₁≤10.

9. The battery cell according to claim 8, wherein the ether polymer comprises a building block represented by Formula (BI) and/or a building block represented by Formula (BII), 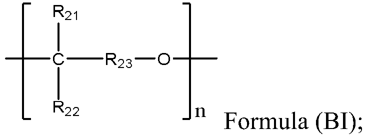
in Formula (BI), R₂₁ and R₂₂ each independently comprise a hydrogen atom, a substituted or unsubstituted C1-C3 alkyl group, or a substituted or unsubstituted C1-C3 alkoxy group; R₂₃ comprises a substituted or unsubstituted C1-C5 alkylene group; 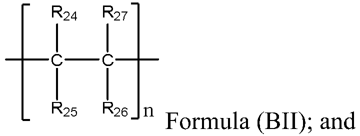
in Formula (BII), R₂₄ to R₂₇ each independently comprise a hydrogen atom, a substituted or unsubstituted C1-C3 alkyl group, a substituted or unsubstituted C1-C3 alkoxy group or ether group, and at least one of R₂₄ to R₂₇ comprises a substituted or unsubstituted C1-C3 alkoxy group or ether group.

10. The battery cell according to any one of claims 1 to 9, wherein the liquid-absorbing polymer comprises an ester polymer, wherein the ester polymer is made into a sheet structure; the sheet structure is subjected to a dynamic frequency scanning test at (Tₘ₃+20)°C to obtain an elasticity modulus G'-loss modulus G" curve, a slope of the elasticity modulus G'-loss modulus G" curve is K₂, 1<K₂<∞, and Tₘ₃°C represents a melting temperature of the ester polymer; optionally, 1<K₂≤100; and further optionally, 1<K₂≤10.

11. The battery cell according to claim 10, wherein the ester polymer comprises a building block represented by Formula (CI) and/or a building block represented by Formula (CII), 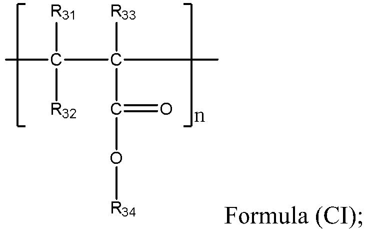
in Formula (CI), R₃₁, R₃₂ and R₃₃ each independently comprise a hydrogen atom, or a substituted or unsubstituted C1-C8 alkyl group; R₃₄ comprises a substituted or unsubstituted C1-C8 alkyl group, or a substituted or unsubstituted C1-C8 hydroxyalkyl group; 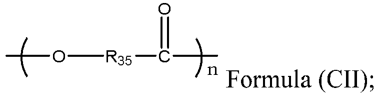
in Formula (CII), R₃₅ comprises a substituted or unsubstituted C2-C6 methylene; and optionally, R₃₅ each independently comprises a substituted or unsubstituted C2-C4 methylene.

12. The battery cell according to any one of claims 1 to 11, wherein the liquid-absorbing polymer comprises an aldehyde-ketone polymer, wherein the aldehyde-ketone polymer is made into a sheet structure; the sheet structure is subjected to a dynamic frequency scanning test at (Tₘ₄+20)°C to obtain an elasticity modulus G'-loss modulus G" curve, a slope of the elasticity modulus G'-loss modulus G" curve is K₃, 0.8≤K₃<∞, and Tₘ₄°C represents a melting temperature of the aldehyde-ketone polymer; optionally, 0.8≤K₃≤100; and further optionally, 0.8≤K₃≤10.

13. The battery cell according to claim 12, wherein the aldehyde-ketone polymer comprises a building block represented by Formula (DI) and/or a building block represented by Formula (DII), 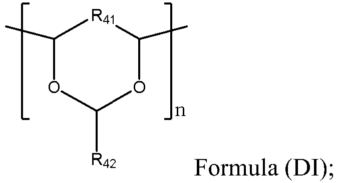
in Formula (DI), R₄₁ comprises a single bond, and a substituted or unsubstituted C1-C6 methylene; R₄₂ comprises a hydrogen atom, and a substituted or unsubstituted C1-C6 alkyl group; 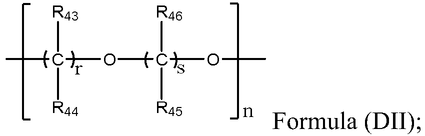
in formula (DII), R₄₃ to R₄₆ each independently comprise a hydrogen atom, a hydroxyl group, a substituted or unsubstituted C1-C3 alkyl group, a substituted or unsubstituted C1-C3 hydroxyalkyl group, or a substituted or unsubstituted C1-C3 alkoxy group; and r and s are each independently selected from integers in a range from 0 to 5, and at least one of r and s is selected from a positive integer.

14. The battery cell according to any one of claims 1 to 13, wherein the liquid-absorbing polymer has a molecular weight ranging from 1.2×10⁵ g/mol to 1.0×10⁶ g/mol.

15. The separator according to any one of claims 1 to 14, wherein the separator body comprises a substrate, and the polymer layer is arranged on at least one surface of the substrate.

16. The separator according to any one of claims 1 to 14, wherein the separator body comprises a substrate and a heat-resistant coating, the heat-resistant coating is arranged on at least one surface of the substrate, and the polymer layer is arranged on a surface of the heat-resistant coating facing away from the substrate.

17. The separator according to any one of claims 1 to 16, wherein the polymer layer further comprises heat-resistant particles;
optionally, based on a total mass of the polymer layer, a ratio of a mass percentage content of the liquid-retaining polymer to a mass percentage content of the heat-resistant particles is (0.2 to 5):1; and optionally, (0.5 to 2):1.

18. The separator according to any one of claims 1 to 17, wherein the polymer layer has a thickness ranging from 0.5 µm to 3 µm; and optionally, 1 µm to 2 µm.

19. A battery cell, comprising the separator comprising any one of claims 1 to 18.

20. A battery, comprising the battery cell according to claim 19.

21. An electrical apparatus, comprising the battery according to claim 20.
